# EUROPEAN PATENT APPLICATION

(11) **EP 4 780 094 A1**
(43) Date of publication of application: **22.07.2026**
(21) Application number: 24870959.4
(22) Date of filing: 27.09.2024
(51) Int. Cl.: H04W 56/00

(54) **COMMUNICATION METHOD AND COMMUNICATION APPARATUS**

(30) Priority: 28.09.2023 CN 202311290120
(71) Applicant: HUAWEI TECHNOLOGIES CO., LTD., Shenzhen, Guangdong 518129 (CN)
(72) Inventor: LI, Fang, Shenzhen, Guangdong 518129 (CN); FAN, Bo, Shenzhen, Guangdong 518129 (CN); YUAN, Shitong, Shenzhen, Guangdong 518129 (CN)
(74) Representative: MERH-IP Matias Erny Reichl Hoffmann Patentanwälte PartG mbB
(86) International application number: PCT/CN2024/121744
(87) International publication number: WO 2025/067422

(57) **Abstract**

This application provides a communication method and a communication apparatus. The method includes: After a beam failure occurs on a terminal device, the terminal device determines a first reference signal, where the first reference signal is a reference signal corresponding to a new beam of the terminal device after beam failure recovery, and the first reference signal is a reference signal included in first beam indication information; and the terminal device determines a first timing advance TA, where the first TA is a TA corresponding to the first beam indication information, and the first TA is used by the terminal device to perform uplink transmission after beam failure recovery. According to the foregoing method, before receiving new beam indication information, the terminal device may determine a TA for performing uplink transmission.

## Description

This application claims priority to Chinese Patent Application No. 202311290120.5, filed with the China National Intellectual Property Administration on September 28, 2023 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

A network device indicates related information of a transmission beam to a terminal device by transmitting beam indication information. The network device may configure beam indication information to be associated with one of a plurality of timing advances (Timing Advance, TA). When the network device indicates which beam indication information is used by the terminal device for uplink transmission, the terminal device performs uplink transmission by using a TA associated with the beam indication information.

After a beam failure occurs on the terminal device, the terminal device may determine a new beam. Before the terminal device receives new beam indication information, the terminal device may perform uplink and downlink transmission by using a reference signal (Reference signal, RS) of the new beam. However, the RS is not associated with a TA. Therefore, before receiving the new beam indication information, the terminal device cannot determine a TA to be used for uplink transmission.

### SUMMARY

This application provides a communication method and a communication apparatus, to determine, before a terminal device receives new beam indication information, a TA for performing uplink transmission.

According to a first aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: After a beam failure occurs on the terminal device, the terminal device determines a first reference signal, where the first reference signal is a reference signal corresponding to a new beam of the terminal device after beam failure recovery, and the first reference signal is a reference signal included in first beam indication information; and the terminal device determines a first TA, where the first TA is a TA corresponding to the first beam indication information, and the first TA is used by the terminal device to perform uplink transmission after beam failure recovery.

Based on the foregoing technical solution, a new beam used by the terminal device after beam failure recovery is determined, where a reference signal corresponding to the new beam is a reference signal included in the first beam indication information, and a TA corresponding to the first beam indication information is determined as a TA for uplink transmission. Therefore, before receiving the new beam indication information, the terminal device may determine the TA for uplink transmission.

That a beam failure occurs on the terminal device may be understood as follows: When a network device configures a beam failure detection set q₀, the terminal device measures a reference signal in the beam failure detection set. If measurement quality of a reference signal in the set is lower than a preset threshold for N consecutive times, it is considered that a beam failure occurs on the terminal device. A value of N and the preset threshold are default values configured by the network device or specified in a protocol.

That a beam failure occurs on the terminal device may also be understood as follows: When the network device configures a plurality of beam failure detection sets, the terminal device measures reference signals in the plurality of beam failure detection sets. If measurement quality of a reference signal in one of the beam failure detection sets is lower than a preset threshold for N consecutive times, it is considered that a beam failure occurs in the beam failure detection set. A value of N and the preset threshold are default values configured by the network device or specified in a protocol.

That a beam failure occurs on the terminal device may also be understood as follows: When the network device does not configure a beam failure detection set, the terminal device determines, as a beam failure detection set q₀, a periodic channel state information-reference signal CSI-RS in a transmission configuration indicator state TCI state of a corresponding control resource set CORESET for monitoring a physical downlink control channel PDCCH. If measurement quality of a reference signal in the set is lower than a preset threshold for N consecutive times, it is considered that a beam failure occurs on the terminal device. A value of N and the preset threshold are default values configured by the network device or specified in a protocol.

That a beam failure occurs on the terminal device may also be understood as follows: When the network device does not configure a beam failure detection set, the terminal device determines, as a plurality of beam failure detection sets, periodic CSI-RSs in TCI states of a plurality of corresponding CORESETs for monitoring a PDCCH. If measurement quality of a reference signal in one of the beam failure detection sets is lower than a preset threshold for N consecutive times, it is considered that a beam failure occurs in the beam failure detection set, where N and the preset threshold are default values configured by the network device or specified in a protocol.

In this application, the beam indication information may be any one of a TCI state, a spatial relation spatial relation, an uplink transmission configuration indicator state UL TCI state, a joint transmission configuration indicator state joint TCI state, and a downlink transmission configuration indicator state DL TCI state. This is not limited in this application.

With reference to the first aspect, in some implementations of the first aspect, the terminal device determines the first TA based on a first association relationship, where the first association relationship is an association relationship between at least one piece of beam indication information and a TA, and the at least one piece of beam indication information includes the first beam indication information.

In a possible implementation, the method further includes: The terminal device receives configuration information of at least one piece of beam indication information, where the beam indication information includes one or more reference signals, and the at least one piece of beam indication information includes the first beam indication information.

In a possible implementation, the first association relationship is configured by a network device.

In a possible implementation, the method further includes: Each of the at least one piece of beam indication information corresponds to a first identifier index of each piece of beam indication information, the at least one piece of beam indication information includes N pieces of beam indication information, each of the N pieces of beam indication information includes the first reference signal, the first beam indication information is beam indication information that is in the N pieces of beam indication information and that has a largest or smallest first identifier index, and N is a positive integer.

According to a second aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: The terminal device sends contention-free random access request information used for beam failure recovery, and the terminal device receives beam recovery success response information, where the beam recovery success response information includes first indication information, the first indication information indicates a first TA, the first TA is used by the terminal device to perform uplink transmission after beam failure recovery, and the beam recovery success response information is carried on a PDCCH associated with a recovery search space set; or the terminal device sends contention-based random access request information used for beam failure recovery, and the terminal device receives random access response information, where the random access response information includes first indication information, the first indication information indicates a first TA, and the first TA is used by the terminal device to perform uplink transmission after beam failure recovery.

Based on the foregoing technical solution, in a process of performing beam failure recovery by the terminal device, the first TA is carried in a message sent by the network device to the terminal device, and the first TA is a TA for performing uplink transmission after the beam failure recovery. Therefore, before receiving new beam indication information, the terminal device may determine the TA for performing uplink transmission.

A new beam used by the terminal device after beam failure recovery is determined, where a reference signal corresponding to the new beam is a reference signal included in the first beam indication information, and a TA corresponding to the first beam indication information is determined as a TA for uplink transmission.

In a possible implementation, after the terminal device receives the random access response information, the terminal device sends third information, where the third information is used for carrying an identifier of the terminal device; and the terminal device receives contention resolution information, where the contention resolution information includes the first indication information.

According to a third aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: A beam failure occurs on at least one reference signal in a first beam failure detection reference signal set of the terminal device, the first beam failure detection reference signal set corresponds to a first control resource set pool index CORESETpoolindex, the first control resource set pool index corresponds to second beam indication information, and the second beam indication information is used by the terminal device to monitor a physical downlink control channel PDCCH associated with the first CORESETpoolindex before the beam failure; and the terminal device determines a first TA, where the first TA is a TA corresponding to the second beam indication information, and the first TA is used by the terminal device to perform uplink transmission after beam failure recovery.

Based on the foregoing technical solution, a PDCCH used by the terminal device before a beam failure is determined, beam indication information corresponding to the PDCCH is determined, and a TA corresponding to the beam indication information is determined as a TA for performing uplink transmission after beam failure recovery.

According to a fourth aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: When a beam failure occurs on the terminal device, the terminal device determines a first reference signal, where the first reference signal belongs to a first candidate beam reference signal set; and the terminal device determines a first TA, where the first TA is a TA corresponding to the first reference signal.

Based on the foregoing technical solution, a reference signal corresponding to a new beam of the terminal device after beam failure recovery is determined, and a TA corresponding to the reference signal is determined as a TA for performing uplink transmission after beam failure recovery.

In a possible implementation, the terminal device determines the first TA based on a second association relationship, where the second association relationship is an association relationship between at least one reference signal in the first candidate beam reference signal set and a TA.

In a possible implementation, the second association relationship is configured by a network device.

According to a fifth aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: When a beam failure occurs on at least one reference signal in a first beam failure detection reference signal set of the terminal device, the terminal device determines a first TA, where the first TA is a TA corresponding to the first beam failure detection reference signal set.

Based on the foregoing technical solution, a beam failure detection reference signal set in which a beam failure occurs on the terminal device is determined, and a TA corresponding to the beam failure detection reference signal set is determined as a TA for performing uplink transmission after beam failure recovery.

In a possible implementation, the terminal device determines the first TA based on a third association relationship, where the third association relationship is an association relationship between at least one beam failure detection reference signal set and a TA.

In a possible implementation, the third association relationship is configured by a network device.

According to a sixth aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: When a beam failure occurs on the terminal device, the terminal device determines a first reference signal, where the first reference signal belongs to a first candidate beam reference signal set; and the terminal device determines a first TA, where the first TA is a TA corresponding to the first candidate beam reference signal set.

Based on the foregoing technical solution, a new beam of the terminal device after beam failure recovery is determined, where the new beam belongs to a first candidate beam reference signal set, and a TA corresponding to the first candidate beam reference signal set is determined as a TA for performing uplink transmission after beam failure recovery.

In a possible implementation, the terminal device determines the first TA based on a fourth association relationship, where the fourth association relationship is an association relationship between at least one candidate beam reference signal set and a TA.

In a possible implementation, the fourth association relationship is configured by a network device.

According to a seventh aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: When a beam failure occurs on at least one reference signal in a first beam failure detection reference signal set of the terminal device, where the first beam failure detection reference signal set corresponds to a first candidate beam reference signal set, the terminal device determines a first TA, where the first TA is a TA corresponding to the first candidate beam reference signal set.

Based on the foregoing technical solution, a beam failure detection reference signal set in which a beam failure occurs on the terminal device is determined, a candidate beam reference signal set corresponding to the beam failure detection reference signal set is determined, and a TA corresponding to the candidate beam reference signal set is determined as a TA for performing uplink transmission after beam failure recovery.

In a possible implementation, the terminal device determines the first TA based on a fourth association relationship and a fifth association relationship, where the fourth association relationship is an association relationship between at least one candidate beam reference signal set and a TA, and the fifth association relationship is a correspondence between a beam failure detection reference signal set and a candidate beam reference signal set.

In a possible implementation, the fourth association relationship and the fifth association relationship are configured by a network device.

According to an eighth aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: When a beam failure occurs on the terminal device, the terminal device determines a first reference signal, where the first reference signal belongs to a first candidate beam reference signal set, and the first candidate beam reference signal set corresponds to a first beam failure detection reference signal set; and the terminal device determines a first TA, where the first TA is a TA corresponding to the first beam failure detection reference signal set.

Based on the foregoing technical solution, when a beam failure occurs on the terminal device, a first reference signal is determined, where the first reference signal belongs to a first candidate beam reference signal set, and the first candidate beam reference signal set corresponds to a first beam failure detection reference signal set; and a TA corresponding to the first beam failure detection reference signal set is determined as a TA for performing uplink transmission after beam failure recovery.

In a possible implementation, the terminal device determines the first TA based on a third association relationship and a fifth association relationship, where the third association relationship is an association relationship between at least one beam failure detection reference signal set and a TA, and the fifth association relationship is a correspondence between a beam failure detection reference signal set and a candidate beam reference signal set.

In a possible implementation, the third association relationship and the fifth association relationship are configured by a network device.

According to a ninth aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: The terminal device determines a first TA, where the first TA is a TA corresponding to third beam indication information, and the third beam indication information is beam indication information that is used for uplink transmission before a beam failure occurs on the terminal device.

Based on the foregoing technical solution, beam indication information used by the terminal device before the beam failure is determined, and a TA corresponding to the beam indication information is determined as a TA for performing uplink transmission after beam failure recovery.

According to a tenth aspect, a communication method is provided. The method may be performed by a network device, or may be performed by a component (for example, a chip or a circuit) of the network device. This is not limited herein. For ease of description, an example in which the method is performed by the network device is used below for description.

The method may include: The network device receives contention-free random access request information used for beam failure recovery, and the network device sends beam recovery success response information, where the beam recovery success response information includes first indication information, the first indication information indicates a first TA, the first TA is used by a terminal device to perform uplink transmission after beam failure recovery, and the beam recovery success response information is carried on a PDCCH associated with a recovery search space set; or a network device receives contention-based random access request information used for beam failure recovery, and the network device sends random access response information, where the random access response information includes first indication information, the first indication information indicates a first TA, and the first TA is used by the terminal device to perform uplink transmission after beam failure recovery.

Based on the foregoing technical solution, in a process of performing beam failure recovery by the terminal device, the first TA is carried in a message sent by the network device to the terminal device, and the first TA is a TA for performing uplink transmission after the beam failure recovery. Therefore, before receiving new beam indication information, the terminal device may determine the TA for performing uplink transmission.

In a possible implementation, after the network device sends the random access response information, the network device receives and sends third information, where the third information is used for carrying an identifier of the terminal device; and the network device sends contention resolution information, where the contention resolution information includes the first indication information.

In any one of the first aspect to the tenth aspect and any possible implementation of the foregoing aspects, the first TA is used for performing uplink transmission in a first time period, a start moment of the first time period is a first moment, and the first moment is any one of the following moments: a moment after first duration after beam failure recovery success of the terminal device; a moment after second duration after the terminal device receives beam recovery success response information; a moment after third duration after the terminal device performs beam failure recovery based on contention-based random access and the terminal device receives a contention resolution message; a moment at 28 symbols after a last symbol in a first physical downlink control channel PDCCH received by the terminal device in a recovery space search set; and a moment after fifth duration after the terminal device sends a first beam failure recovery medium access control control element BFR MAC CE, where at the moment at the 28 symbols after the last symbol in the first PDCCH received by the terminal device, the first PDCCH and a downlink control information DCI format for scheduling a first physical uplink shared channel PUSCH have a same hybrid automatic repeat request HARQ process, and an NDI field is toggled.

In a possible implementation, an end moment of the first time period is a second moment, and the second moment is any one of the following moments: a moment after fourth duration after the terminal device receives DCI signaling used for indicating new beam indication information; a moment after fifth duration after the terminal device sends first acknowledgment ACK feedback information, where the first ACK feedback information is used for indicating that the terminal successfully receives the DCI signaling used for indicating the new beam indication information; a moment after seventh duration after the terminal device receives medium access control control element MAC CE signaling used for activating beam indication information; and a moment after eighth duration after the terminal device sends second ACK feedback information, where the second ACK feedback information is used for indicating that the terminal successfully receives the MAC CE signaling used for activating beam indication information.

According to an eleventh aspect, a communication apparatus is provided, including: a processing unit, configured to determine a first reference signal, where the first reference signal is a reference signal corresponding to a new beam of the apparatus after beam failure recovery, and the first reference signal is a reference signal included in first beam indication information, where the processing unit is further configured to determine a first TA, where the first TA is a TA corresponding to the first beam indication information, and the first TA is used by the apparatus to perform uplink transmission after beam failure recovery.

In a possible implementation, the processing unit is further configured to determine the first TA based on a first association relationship, where the first association relationship is an association relationship between at least one piece of beam indication information and a TA, and the at least one piece of beam indication information includes the first beam indication information.

In a possible implementation, the apparatus further includes: a receiving unit, configured to receive configuration information of at least one piece of beam indication information, where the beam indication information includes one or more reference signals, and the at least one piece of beam indication information includes the first beam indication information.

In a possible implementation, the first association relationship is configured by a network device.

In a possible implementation, each of the at least one piece of beam indication information corresponds to a first identifier index of each piece of beam indication information, the at least one piece of beam indication information includes N pieces of beam indication information, each of the N pieces of beam indication information includes the first reference signal, the first beam indication information is beam indication information that is in the N pieces of beam indication information and that has a largest or smallest first identifier index, and N is a positive integer.

According to a twelfth aspect, a communication apparatus is provided, including: a sending unit, configured to send contention-free random access request information used for beam failure recovery; and a receiving unit, configured to reception beam recovery success response information, where the beam recovery success response information includes first indication information, the first indication information indicates a first TA, the first TA is used by the terminal device to perform uplink transmission after beam failure recovery, and the beam recovery success response information is carried on a PDCCH associated with a recovery search space set, where the sending unit is further configured to send contention-based random access request information used for beam failure recovery, and the receiving unit is further configured to receive random access response information, where the random access response information includes first indication information, the first indication information indicates a first TA, and the first TA is used by the apparatus to perform uplink transmission after beam failure recovery.

In a possible implementation, the sending unit is further configured to send third information, where the third information is used for carrying an identifier of the terminal device; and the receiving unit is further configured to receive contention resolution information, where the contention resolution information includes the first indication information.

According to a thirteenth aspect, a communication apparatus is provided, including: a processing unit, configured to determine a first TA, where the first TA is a TA corresponding to the second beam indication information, and the first TA is used by the terminal device to perform uplink transmission after beam failure recovery; and a beam failure occurs on at least one reference signal in a first beam failure detection reference signal set of the apparatus, the first beam failure detection reference signal set corresponds to a first control resource set pool index CORESETpoolindex, the first control resource set pool index corresponds to second beam indication information, and the second beam indication information is used by the apparatus to monitor a physical downlink control channel PDCCH associated with the first CORESETpoolindex before the beam failure.

According to a fourteenth aspect, a wireless communication apparatus is provided, including modules or units configured to perform the method in the first aspect or any one of the possible implementations of the first aspect.

According to a fifteenth aspect, a wireless communication apparatus is provided, including modules or units configured to perform the method in the second aspect or any one of the possible implementations of the second aspect.

According to a sixteenth aspect, a wireless communication apparatus is provided, including modules or units configured to perform the method in the third aspect or any one of the possible implementations of the third aspect.

According to a seventeenth aspect, a wireless communication apparatus is provided, including modules or units configured to perform the method in the fourth aspect or any one of the possible implementations of the fourth aspect.

According to an eighteenth aspect, a wireless communication apparatus is provided, including modules or units configured to perform the method in the fifth aspect or any one of the possible implementations of the fifth aspect.

According to a nineteenth aspect, a wireless communication apparatus is provided, including modules or units configured to perform the method in the sixth aspect or any one of the possible implementations of the sixth aspect.

According to a twentieth aspect, a wireless communication apparatus is provided, including modules or units configured to perform the method in the seventh aspect or any one of the possible implementations of the seventh aspect.

According to a twenty-first aspect, a wireless communication apparatus is provided, including modules or units configured to perform the method in the eighth aspect or any one of the possible implementations of the eighth aspect.

According to a twenty-second aspect, a wireless communication apparatus is provided, including modules or units configured to perform the method in the ninth aspect or any one of the possible implementations of the ninth aspect.

According to a twenty-third aspect, a wireless communication apparatus is provided, including modules or units configured to perform the method in the tenth aspect or any one of the possible implementations of the tenth aspect.

According to a twenty-fourth aspect, a communication device is provided, including a processor, where the processor is coupled to a memory, and may be configured to perform the method in any one of the first aspect to the tenth aspect and any possible implementation of the foregoing aspects. In a possible implementation, the communication device further includes the storage. In a possible implementation, the communication device further includes a communication interface, and the processor is coupled to the communication interface. In a possible implementation, the communication device further includes a communication interface, and the processor is coupled to the communication interface.

In an implementation, the communication device is a terminal device. When the communication device is a terminal device, the communication interface may be a transceiver or an input/output interface. In a possible implementation, a transceiver may be a transceiver circuit. In a possible implementation, an input/output interface may be an input/output circuit.

In another implementation, the communication device is a network device. When the communication device is a network device, the communication interface may be a transceiver or an input/output interface. In a possible implementation, a transceiver may be a transceiver circuit. In a possible implementation, an input/output interface may be an input/output circuit.

In another implementation, the communication device is a chip or a chip system. When the communication device is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a twenty-fifth aspect, a communication apparatus is provided, and includes an input circuit, an output circuit, and a processing circuit. The processing circuit is configured to receive a signal through the input circuit, and transmit a signal through the output circuit, so that the method in any one of the first aspect to the tenth aspect and any possible implementation of the foregoing aspects is implemented.

In a specific implementation process, the communication apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example without limitation to, a receiver, and a signal output by the output circuit may be output to and transmitted by, for example without limitation to, a transmitter. The input circuit and the output circuit may be different circuits or may be a same circuit, and in this case, the circuit is used as the input circuit and the output circuit respectively at different moments. Specific implementations of the processor and the various circuits are not limited in embodiments of this application.

According to a twenty-sixth aspect, a processing apparatus is provided, and includes a processor and a memory. The processor is configured to read instructions stored in the memory, and may receive a signal through a receiver, and transmit a signal through a transmitter, to perform the method in any one of the first aspect to the tenth aspect and any possible implementation of the foregoing aspects.

In a possible implementation, there are one or more processors and one or more memories.

In a possible implementation, the memory and the processor may be integrated together, or the memory and the processor are disposed separately.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processor in the foregoing aspect may be a chip, and the processor may be implemented by hardware or software. When the hardware is used for implementation, the processor may be a logic circuit, an integrated circuit, or the like. When the software is used for implementation, the processor may be a general-purpose processor, and is implemented by reading software code stored in the memory. The memory may be integrated into the processor, or may be located outside the processor, and exist independently.

According to a twenty-seventh aspect, a computer program product is provided. The computer program product includes a computer program (which may also be referred to as code or instructions). When the computer program is run, a computer is enabled to perform the method in any one of the first aspect to the tenth aspect and any possible implementation of the foregoing aspects.

According to a twenty-eighth aspect, a computer-readable medium is provided. The computer-readable medium stores a computer program (which may also be referred to as code or instructions). When the computer program is run on a computer, the computer is enabled to perform the method in any one of the first aspect to the tenth aspect and any possible implementation of the foregoing aspects.

According to a twenty-ninth aspect, a chip system is provided. The chip system includes a memory and a processor. The memory is configured to store a computer program, and the processor is configured to invoke the computer program from the memory and run the computer program, to enable a communication device on which the chip system is installed to perform the method according to any one of the first aspect to the tenth aspect and the possible implementations thereof.

The chip system may include an input circuit or interface configured to send information or data, and an output circuit or interface configured to receive information or data.

According to a thirtieth aspect, a communication system is provided, including at least one of the foregoing terminal device and network device.

### BRIEF DESCRIPTION OF DRAWINGS

FIG. 1 is a diagram of an example of a communication system to which this application is applicable;
FIG. 2 is a diagram of a communication method according to an embodiment of this application;
FIG. 3 is a diagram of MAC CE signaling according to an embodiment of this application;
FIG. 4 is a block diagram of a communication apparatus according to an embodiment of this application;
FIG. 5 is a block diagram of another communication apparatus according to an embodiment of this application;
FIG. 6 is a block diagram of a terminal device according to an embodiment of this application; and
FIG. 7 is a block diagram of a network device according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (Long Term Evolution, LTE) system, an LTE frequency division duplex (Frequency Division Duplex, FDD) system, LTE time division duplex (Time Division Duplex, TDD), wireless fidelity (wireless fidelity, Wi-Fi), a device to device (device to device, D2D) communication system, a vehicle-to-everything (vehicle-to-everything, V2X) communication system, a universal mobile telecommunications system (Universal Mobile Telecommunications System, UMTS), a worldwide interoperability for microwave access (Worldwide Interoperability for Microwave Access, WiMAX) communication system, a machine to machine (machine to machine, M2M) communication system, a machine type communication (machine type communication, MTC) system, an internet of things (internet of things, IoT) communication system, a non-terrestrial network (non-terrestrial network, NTN) system, a 5th generation (5th Generation, 5G) mobile communication system, a new radio (New Radio, NR) system, or a future wireless communication system.

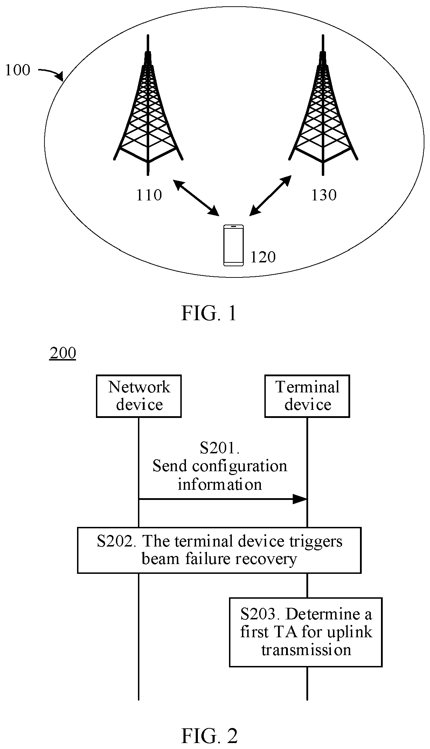

First, a communication system applicable to embodiments of this application is briefly described with reference to FIG. 1. Details are as follows:
For example, FIG. 1 is a diagram of a wireless communication system 100 applicable to an embodiment of this application. As shown in FIG. 1, the wireless communication system 100 may include at least one network device, for example, a network device 110 and a network device 130 shown in FIG. 1. The wireless communication system 100 may further include at least one terminal device, for example, a terminal device 120 shown in FIG. 1. For example, a plurality of antennas may be configured for both the network device and the terminal device, and the network device and the terminal device may communicate with each other by using a multi-antenna technology.

When the network device communicates with the terminal device, the network device may manage one or more cells, and one cell may include at least one terminal device. Optionally, the network device 110 and the terminal device 120 form a single-cell communication system. It is assumed that a cell is denoted as a cell #1. The network device 110 may be a network device in the cell #1, or the network device 110 may serve a terminal device (for example, the terminal device 120) in the cell #1. Optionally, the network device 130 and the terminal device 120 form a single-cell communication system. It is assumed that a cell is denoted as a cell #2. The network device 130 may be a network device in the cell #2, or the network device 110 may serve a terminal device (for example, the terminal device 120) in the cell #1.

It should be understood that, if the cell #1 is a current serving cell of the terminal device 120, and the cell #2 is a neighboring cell of the terminal device 120, the terminal device may perform communication by using only a beam of the cell #1, or may perform communication by using only a beam of the cell #2, or the terminal device performs communication by using both a beam of the cell #1 and a beam of the cell #2.

It should be noted that, the cell may be understood as an area within coverage of a radio signal of the network device.

It should be understood that FIG. 1 is merely a simplified diagram of an example for ease of understanding. The wireless communication system 100 may further include another network device or may further include another terminal device that is not shown in FIG. 1.

The terminal device in embodiments of this application may also be referred to as user equipment (User Equipment, UE), an access terminal, a subscriber unit, a subscriber station, a mobile station, a remote station, a remote terminal, a mobile device, a user terminal, a terminal, a wireless communication device, a user agent, a user apparatus, or the like. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in a future evolved public land mobile network (Public Land Mobile Network, PLMN), or the like. This is not limited in embodiments of this application.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an internet of things (internet of things, IoT) system. IoT is an important part of future information technology development. A main technical feature of the IoT is to connect an object to a network by using a communication technology, to implement an intelligent network for human-machine interconnection and thing-thing interconnection.

It should be understood that a specific form of the terminal device is not limited in this application.

The network device in embodiments of this application may alternatively be a device configured to communicate with the terminal device. The network device may be a base transceiver station (Base Transceiver Station, BTS) in a global system for mobile communications (Global System for Mobile communications, GSM) or a code division multiple access (Code Division Multiple Access, CDMA) system, a NodeB (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, this communication apparatus may be a relay station, an access point, a vehicle-mounted device, a wearable device, a communication apparatus in a 5G network, a communication apparatus in a future evolved PLMN network, or the like. This is not limited in embodiments of this application.

It should be understood that the network device in a wireless communication system may be any device having a wireless transceiver function. The device includes but is not limited to: an evolved NodeB (evolved NodeB, eNB), a radio network controller (radio network controller, RNC), a road side unit (road side unit, RSU), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission reception point (transmission reception point, TRP). Alternatively, the device may be a gNB or a transmission point (TRP or TP) in a 5G (like NR) system, one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point. Alternatively, the network device may be a network side apparatus that provides a communication service or communication control for a terminal device in vehicle-to-everything.

The network device provides a communication service for a terminal device in a cell. The terminal device in the cell communicates with the network device by using a transmission resource (for example, a frequency domain resource or a time domain resource) allocated by the network device. The cell may belong to a macro base station (for example, a macro eNB or a macro gNB).

To facilitate understanding of embodiments of this application, terms used in this application are first briefly described.

### 1. Beam

The beam may be represented in an NR protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (Quasi-Co-Location, QCL) information, a QCL assumption, a QCL indication, or the like. The beam may be indicated by using a transmission configuration indicator state (TCI-state) parameter or a spatial relation (spatial relation) parameter. Therefore, in this application, the beam may be replaced with a spatial domain filter, a spatial filter, a spatial domain parameter, a spatial parameter, a spatial domain setting, a spatial setting, QCL information, a QCL assumption, a QCL indication, a TCI state (including a downlink (downlink, DL) TCI state, an uplink (uplink, UL) TCI state), a spatial relation, or the like. The above terms are also equivalent to each other. Alternatively, the beam may be replaced with another term for representing a beam. This is not limited in this application.

A beam used to send a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a TCI state.

A beam used to receive a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation spatial relation, an uplink TCI state, or a sounding reference signal (sounding reference signal, SRS) resource (indicating a transmission beam using the SRS). Therefore, the uplink beam may alternatively be replaced with the SRS resource.

The transmission beam may refer to distribution of signal strength formed in different directions in space after a signal is transmitted through an antenna, and the reception beam may refer to distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, a network device measures different beams by using different resources, a terminal device feeds back measured resource quality, and the network device knows quality of a corresponding beam. During data transmission, beam information is also indicated by using a resource corresponding to the beam information. For example, the network device indicates information about a physical downlink shared channel (physical downlink shared channel, PDSCH) beam of the terminal device by using a transmission configuration indicator (transmission configuration indicator, TCI) resource in downlink control information (downlink control information, DCI).

Optionally, a plurality of beams having same or similar communication features are considered as one beam. One beam may include one or more antenna ports, configured to transmit a data channel, a control channel, a sounding signal, and the like. The one or more antenna ports forming the beam may also be considered as one antenna port set.

In embodiments of this application, unless otherwise specified, a beam is a transmission beam. During beam measurement, each beam of the network device corresponds to one resource. Therefore, an index of a resource may uniquely identify a beam corresponding to the resource.

### 2. Resource

During beam measurement, a beam corresponding to a resource may be uniquely identified by using an index of the resource.

The resource may be an uplink signal resource, or may be a downlink signal resource.

An uplink signal includes but is not limited to: a sounding reference signal (sounding reference signal, SRS) and a demodulation reference signal (demodulation reference signal, DMRS).

A downlink signal includes but is not limited to a channel state information-reference signal (channel state information-reference signal, CSI-RS), a cell specific reference signal (cell specific reference signal, CS-RS), a UE specific reference signal (user equipment specific reference signal, US-RS), a demodulation reference signal (demodulation reference signal, DMRS), and a synchronization signal/physical broadcast channel block (synchronization signal/physical broadcast channel block, SS/PBCH block). The SS/PBCH block may be referred to as a synchronization signal block (synchronization signal block, SSB) for short.

The resource may be configured by using radio resource control (radio resource control, RRC) signaling.

In a configuration structure, one resource is one data structure, including a related parameter of an uplink/downlink signal corresponding to the resource, for example, a type of the uplink/downlink signal, a resource element that carries the uplink/downlink signal, transmit time and a transmit periodicity of the uplink/downlink signal, and a quantity of ports used to send the uplink/downlink signal.

A resource of each uplink/downlink signal has a unique index, to identify the resource of the uplink/downlink signal. It may be understood that the index of the resource may also be referred to as an identifier of the resource. This is not limited in embodiments of this application.

### 3. Transmission configuration indicator state (TCI state)

A TCI is used for indicating a quasi-co-location (quasi-co-location, QCL) relationship between two reference signals (a target reference signal and a referenced reference signal). The target reference signal is generally a demodulation reference signal (demodulation reference signal, DMRS), and the referenced reference signal may be generally a channel state information-reference signal (channel state information-reference signal, CSI-RS) and an SSB (SS/PBCH block) including a primary synchronization signal (primary synchronization signal, PSS), a secondary synchronization signal (secondary synchronization signal, SSS), and a physical broadcast channel (Physical Broadcast Channel, PBCH).

Each TCI state includes one index TCI state identifier (identifier, ID) of each TCI state and two pieces of QCL-Info. The QCL-Info further includes a referenced reference signal (reference Signal), and is used for indicating a reference signal which forms a QCL relationship with the referenced reference signal. In other words, the reference signal which forms a QCL relationship with the referenced reference signal herein is essentially a beam which forms a QCL relationship with the referenced reference signal. The type of the QCL-Info may have four values {typeA, typeB, typeC, typeD}. Using typeD as an example, typeD indicates that two reference signal resources have same spatial reception parameter information, that is, two beams have a same reception beam. A maximum of one of the two pieces of QCL-Info included in the TCI state can be typeD. In other words, a pairing relationship between a transmission beam of a base station and a reception beam of the terminal device is indicated by configuring QCL-Info whose type is typeD in the TCI state. To be specific, the terminal device may learn, by using the received QCL-Info whose type is typeD in the TCI state, of a reception beam used for receiving data.

The following describes configuration, activation, and indication of a TCI state.

TCI state configuration: The network device configures a plurality of TCI states for the terminal device by using RRC (Radio resource control, resource control) signaling. These TCI states each include one piece of QCL-Info whose type is typeD.

TCI state activation: After configuring the plurality of TCI states, the network device further needs to activate eight of the TCI states by using a medium access control control element (Medium Access Control Control Element, MAC CE). The eight TCI states are in one-to-one correspondence with eight values of a TCI field in DCI. That is, the eight TCI states corresponding to the eight values of the TCI field in the DCI are determined by using MAC CE signaling. There are many types of MAC CEs. In addition to a MAC CE used for activating a TCI state, there are many MAC CEs for other purposes. This application relates to only a MAC CE used for activating a TCI state/TCI state combination. Therefore, unless otherwise specified, each MAC CE in this application is such a MAC CE.

TCI state indication: The network device indicates a specific TCI state by using a TCI field in the DCI, and the terminal device may determine, by using a specific value of the TCI field, a reception beam corresponding to a data transmission beam, to receive data by using the corresponding reception beam.

### 4. Spatial relation (Spatial relation)

The spatial relation is used for indicating a transmission beam for uplink transmission, and a function of the spatial relation is similar to that of a TCI state, and is used to notify the terminal device of a transmission beam which is used for performing uplink transmission.

The spatial relation also needs to be configured through RRC signaling first. Configuration information of the spatial relation includes an ID of the spatial relation, a cell ID, a target reference signal resource, a path loss measurement reference signal, a power control parameter, and the like.

The target reference signal resource (which may be any one of an SRS/SSB/CSI-RS) is used for indicating a corresponding uplink beam. If a spatial relation #1 is for uplink transmission, and the spatial relation #1 includes a target reference signal resource #2, it indicates that a transmission beam for the uplink transmission is a transmission/reception beam of a target reference signal.

For example, when the target reference signal resource is an uplink resource SRS, it indicates that the transmission beam for the uplink transmission is a transmission beam of the SRS (the transmission beam of the SRS is known).

For another example, when the target reference signal resource is a downlink resource such as an SSB/CSI-RS, it indicates that a transmission beam used for uplink transmission is a reception beam of the SSB/CSI-RS (the reception beam of the SSB/CSI-RS is known).

The network device may configure a plurality of spatial relations for the terminal device. Then, one of the spatial relations is activated for corresponding data transmission by using a MAC CE. Uplink transmission includes a physical uplink control channel (Physical Uplink Control CHannel, PUCCH), an SRS, a physical uplink shared channel (physical uplink shared channel, PUSCH), and the like, each of which needs a corresponding spatial relation. A spatial relation of the PUCCH is indicated by using MAC CE signaling. A spatial relation of the SRS is also indicated by using MAC CE signaling. During PUSCH transmission, a specific SRS is associated, and a spatial relation of the SRS is for transmission.

### 5. Unified TCI (unified TCI)

The unified TCI is a unified beam indication framework. The network device may indicate one beam to the terminal device, and the beam is used for a plurality of channels and/or reference signals simultaneously. A common beam may be an uplink common beam, a downlink common beam, or an uplink and downlink common beam, and the terminal device may use the common beam in subsequent transmission. In other words, the network device may indicate one uplink common beam for the terminal device, for transmission of a plurality of uplink channels and/or uplink reference signals. Alternatively, one downlink common beam may be indicated for the terminal device, for transmission of a plurality of downlink channels and/or downlink reference signals. Alternatively, one uplink and downlink common beam may be indicated for the terminal device, for transmission of a plurality of uplink channels and/or uplink reference signals and a plurality of downlink channels and/or downlink reference signals. In other words, the uplink and downlink common beam may be used for both uplink transmission and downlink transmission.

Two TCI states: a DL or joint TCI and a UL TCI may be configured for the terminal device.

Both (a maximum of 128) joint/DL TCI states and (a maximum of 64) UL TCI states can be configured for the UE.

The base station may configure a TCI mode currently used by the UE to be a joint mode or a separate mode. In the joint mode, it is indicated that one joint TCI state can be used for both uplink and downlink transmission. In the separate mode, the base station needs to indicate that a DL TCI state and a UL TCI state are used for uplink and downlink transmission separately.

When the UE receives activation signaling of a TCI state indicated by a MAC CE, where the activation signaling includes an identifier ID of the TCI state, the UE determines, according to the RRC configuration, which TCI is activated by the MAC CE.

### 6. Multiple transmission reception point unified TCI framework (mTRP unified TCI framework)

The mTRP refers to multiple transmission reception point (multiple transmission reception point), and allows a network to perform transmission of data for (serve) one user via multiple nodes (multiple antennas, multiple stations, or multiple transceiver units) simultaneously.

In a multi-station transmission scenario, the network device needs to indicate a plurality of common beams to the terminal device for multi-station transmission. As shown in FIG. 1, two base stations simultaneously transmit signals to a terminal device, and each base station uses one common beam. The network device needs to indicate, to the terminal device, common beams corresponding to the two stations. After receiving the two common beams, the terminal device needs to further determine how the two common beams are applied to transmission of each channel or reference signal. For example, some PDCCHs are sent via the base station 110, and a common beam 1 needs to be used; some PDCCHs are sent by using the base station 130, and a common beam 2 needs to be used; and some PDCCHs are sent by using both the base station 110 and the base station 130, and both the common beam 1 and the common beam 2 need to be used. The terminal device needs to determine which common beam is used for which PDCCH.

It should be understood that transmission in this application may be sending, or may be receiving.

The mTRP scenario is further classified into single DCI (single DCI mTRP, SDCI mTRP) and multiple DCI (multiple DCI mTRP, mDCI mTRP). The SDCI mTRP means that when ideal backhaul exists between two nodes that simultaneously serve one user (meaning that an information exchange delay between the two nodes can be ignored), the two nodes may jointly serve the UE in a very close manner. In this case, one of the two nodes implements unified/joint scheduling for the UE by sending DCI. In this case, the DCI needs to be sent only once, and the DCI indicates beams used by the UE to receive data from the two nodes (that is, the two beams are respectively used for the two nodes). The mDCI mTRP means that when no ideal backhaul exists between two nodes (the nodes are TRPs) that simultaneously serve one user (meaning that an information exchange delay between the two nodes is large and cannot be ignored), the two nodes cannot jointly serve the UE in a very close manner. In this case, the two nodes should independently schedule the UE. Because of independent scheduling, the two nodes need to independently send DCI commands to the UE for scheduling. Therefore, resource allocation and beam indication of the two nodes are respectively delivered by using two pieces of independent DCI.

This application focuses on the SDCI mTRP scenario.

### 7. Timing advance TA

There is a delay in spatial transmission of a signal, and a longer distance between a terminal and the network device indicates a longer delay in an arrival of a signal sent by the terminal at the network device. Distances from different terminals to the network device are different. Therefore, time differences between arrivals of signals sent by different terminals at the network device are also different. In this way, when the terminals receive downlink information sent by the network device and then send uplink signals, the uplink signals arrive at the network device at different moments. To ensure orthogonality of uplink transmission and avoid intra-cell (intra-cell) interference, a timing advance is required for uplink sending of a terminal compared with downlink receiving.

In the mTRP (multiple transmission reception point, multiple transmission reception point) scenario, a network is allowed to perform transmission of data for (serve) one user via multiple nodes (multiple antennas, multiple stations, or multiple transceiver units) simultaneously. In the mTRP scenario, one cell corresponds to a plurality of stations (intra-cell mTRP, intra-cell multiple stations), and uplink transmission in the cell is sent to the multiple stations. Distances between the terminal device and the plurality of stations are usually not equal. As a result, signals transmitted to the plurality of stations should use different TA values. In other words, in a serving cell, the terminal device may perform uplink transmission by using different TAs to communicate with the network device. Currently, one cell corresponds to a maximum of two stations. In other words, in one cell, a maximum of two TAs can be maintained between the terminal device and the network device.

In addition, for a non-serving cell, the network device does not need to configure all detailed parameters of the cell for the terminal device, but only needs to configure related information of an SSB (Synchronization Signal and PBCH Block, synchronization signal-broadcast channel measurement resource block) of the non-serving cell for the terminal device. When a station is located in a current serving cell but another station is located in a non-serving cell (inter-cell mTRP, inter-cell multiple stations), two TAs may also be maintained between the terminal device and the network device.

### 8. Control resource set (Control Resource Set, CORESET)

### Control resource set (Control Resource Set, CORESET) and search space (Search Space, SS)

The CORESET may indicate a frequency domain resource location of a control channel and a length of a symbol occupied the control channel in time domain. The symbol may be an orthogonal frequency division multiplexing (orthogonal frequency division multiplexing, OFDM) symbol.

The search space may indicate time domain location information of the control channel.

For example, the CORESET defines a frequency domain resource location of a resource block and a length of a symbol occupied by the resource block in time domain. The search space defines a location of the resource block in time domain, that is, the search space defines an occurrence periodicity, a slot location, and a start symbol location of the resource block in time domain. It can be learned from the foregoing that the CORESER defines a time frequency size of the resource block, and the CORESER and the search space jointly define time frequency information of occurrence of the resource block.

It should be noted that time domain information and frequency domain information of the resource block that are jointly defined by the CORESET and the search space correspond to time domain information and frequency domain information of the resource occupied by the control channel.

The control channel mentioned in this specification refers to a physical downlink control channel (Physical Downlink Control Channel, PDCCH).

### 9. Beam failure recovery

For the mTRP scenario, there are two existing beam failure recovery mechanisms: cell-level beam failure recovery and TRP-level beam failure recovery.

When only one beam failure detection reference signal set (Beam Failure Detection Reference Signal set, BFD-RS set) and one candidate beam set are configured for each bandwidth part (Bandwidth Part, BWP) of each cell of the terminal device, the beam failure detection set includes one or more periodic CSI-RSs, and the candidate beam set includes one or more periodic CSI-RSs or SSBs. The terminal device performs beam failure detection based on a CSI-RS in a configured beam failure detection set, and determines a candidate beam from a candidate beam set. This manner may be understood as cell-level beam failure recovery, that is, one cell corresponds to one beam failure detection set and one candidate beam set.

When two beam failure detection sets and two candidate beam sets are configured for each BWP of each cell of the terminal device, the beam failure detection sets are associated with the candidate beam sets in a one-to-one manner, and two PUCCH scheduling request resources are further configured, and are separately associated with the two beam failure detection sets. When an RS in one of the beam failure detection sets detects a beam failure, the terminal selects a new beam from a candidate beam set associated with the beam failure detection set, and applies for uplink scheduling by using a PUCCH resource associated with the beam failure detection set. Then, the network device sends an uplink scheduling request, and the terminal device sends a MAC CE, where the MAC CE includes information such as a beam failure detection set ID, whether a new beam exists, and a new beam ID. It may be understood that when a beam of a TRP fails, beam failure information and new beam information are sent via another TRP, which may be referred to as TRP-level beam failure recovery. When a beam failure occurs on each of the two TRPs, a random access procedure is triggered.

When the network device does not explicitly configure a beam failure detection set (regardless of one or two), the terminal device may monitor two beams corresponding to a PDCCH. When the terminal configures a first CORESET and a second CORESET to respectively correspond to control channel group identifiers (CORESETPoolIndex) #0 and #1, the terminal device uses an RS in a TCI state of a CORESET corresponding to a CORESETPoolIndex #i as an i^{th} BFD-RS set.

The network device may configure a TCI state to be associated with one of a plurality of TAs. When the network device indicates a TCI state used by the terminal device for uplink transmission, the terminal performs uplink transmission by using a TA associated with the TCI state.

After a beam failure occurs on the terminal device, the terminal device may determine a new beam (that is, an SSB or a CSI-RS in the candidate beam set). Before a new TCI state indication, the terminal device may perform uplink and downlink transmission with reference to the RS. However, the RS is not associated with a TA. Therefore, before the new TCI state indication, the terminal device cannot determine a TA to be used for uplink transmission.

This application provides a plurality of communication determining methods, so that the terminal device can determine a TA for performing uplink transmission before receiving a new TCI state indication.

It should be understood that descriptions of specific scenarios in embodiments of this application are merely examples. In addition to the foregoing described application scenarios, the method provided in embodiments of this application is also applicable to an application scenario in which a similar problem exists.

In the descriptions of embodiments of this application, unless otherwise stated, "a plurality" or "a plurality of" means two or more than two. In addition, "at least one" may be replaced with "one or more".

Ordinal numbers such as "first" and "second" in embodiments of this application are intended to distinguish between a plurality of objects, but are not intended to limit sizes, content, an order, a time sequence, priorities, importance degrees, or the like of the plurality of objects. For example, first indication information and second indication information may be same information, or may be different information. In addition, such names do not indicate that content, sizes, application scenarios, transmit ends/receive ends, priorities, importance degrees, or the like of the two pieces of information are different. In addition, step numbers in embodiments described in this application are merely intended to distinguish between different steps, but are not intended to limit a sequence of the steps.

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", or "transmission".

It should be understood that names of all nodes and information in this application are merely names specified for ease of description in this application, and may be different in an actual network. It should not be understood that the names of all the nodes and the information are limited in this application. On the contrary, any name that has a function that is the same as or similar to that of the node or the information used in this application is considered as a method or an equivalent replacement in this application, and falls within the protection scope of this application. Details are not described below again.

The following describes in detail a plurality of communication methods provided in embodiments of this application with reference to the accompanying drawings.

It should be understood that step numbers in embodiments of this application are merely used for description, and do not limit a sequence of steps.

FIG. 2 shows a communication method 200 according to this application. The method 200 is applicable to a cell-level beam failure recovery scenario. The method in FIG. 2 includes at least some of the following content.

S201. A network device sends configuration information to a terminal device.

The network device sends RRC (Radio resource control, radio resource control) configuration information to the terminal device.

For the cell-level beam failure recovery scenario, the configuration information may include one or more of the following information: a beam failure detection reference signal set and a candidate beam reference signal set that correspond to each serving cell (serving cell), an association relationship (that is, an example of a first association relationship) between beam indication information (TCI state/spatial relation) and a TA or a timing advance group (Timing advance group, TAG) TAG, random access information of a beam failure, and the like. The random access information of the beam failure may include one or more of a preamble sequence, a random access occasion (RACH occasion), an association relationship between an SSB and a RACH occasion, and the like.

The TAG corresponds to a group of cells that use a same TA value, and each TAG corresponds to one TAG identifier. Each TAG corresponds to one TA value, and all cells in each TAG group use the TA value. When a cell corresponds to a TAG (a correspondence between a cell and a TAG is configured by the network device for the terminal device), a TA corresponding to the TAG is used for uplink transmission of the cell.

In this application, the beam indication information may be any one of a transmission configuration indicator state TCI state, a spatial relation spatial relation, an uplink transmission configuration indicator state UL TCI state, a joint transmission configuration indicator state joint TCI state, and a downlink transmission configuration indicator state DL TCI state. This is not limited in this application.

For a TRP-level beam failure recovery scenario, the configuration information may include one or more of the following: a plurality of beam failure detection reference signal sets and a plurality of candidate beam reference signal sets that correspond to each serving cell, and a plurality of scheduling request (scheduling request, SR) resource configurations carried on a PUCCH. Scheduling application resources of the PUCCH, the beam failure detection reference signal sets, and the candidate beam reference signal sets are in one-to-one correspondence, and correspond to one TRP. Specifically, when one serving cell corresponds to two TRPs, the configuration information may include one or more of the following: two beam failure detection reference signal sets and two candidate beam reference signal sets that correspond to each serving cell, and two scheduling request (scheduling request, SR) resource configurations carried on a PUCCH. Scheduling application resources of the PUCCH, the beam failure detection reference signal sets, and the candidate beam reference signal sets are in one-to-one correspondence, and correspond to one TRP.

S202. The terminal device triggers a beam failure recovery procedure.

When the network device explicitly configures a beam failure detection reference signal set, if the terminal device detects that all RS transmission beams in the beam failure detection reference signal set fail, a beam failure procedure is triggered. That the terminal device detects that all RS transmission beams in the beam failure detection reference signal set fail may be understood as that when the terminal device detects that quality of all RSs in the beam failure detection reference signal set is lower than a preset threshold for a link failure for N consecutive times, it is considered that a beam failure occurs on the terminal. N may be a positive integer greater than 1 configured by the network device. The preset threshold for the link failure may be a signal strength threshold configured by the network device. When the network device explicitly configures only one beam failure detection reference signal set, the beam failure recovery may be referred to as the cell-level beam failure recovery scenario.

In a possible implementation, a serving cell having a beam failure is a primary cell (Primary cell, PCell) or a primary secondary cell (primary secondary cell, PSCell), and the network device configures, for the serving cell, a contention-free random access (Contention-free Random Access, CFRA) resource used for beam failure recovery.

In this case, the terminal device performs beam failure recovery based on the CFRA. A main procedure is as follows:

When the terminal device detects, in a candidate beam reference signal set, a new beam that satisfies a beam recovery condition, the terminal device sends, to the network device, contention-free random access request information used for beam failure recovery. For example, a random access pilot is sent by using a CFRA resource associated with the new beam, and is carried on a physical random access channel (physical random access channel, PRACH). The beam recovery condition may be understood as follows: The terminal device measures reference signals in the candidate beam reference signal set, and the terminal device determines one of the reference signals as a reference signal of the new beam for beam failure recovery. Quality (for example, L1-RSRP) of the reference signal is greater than or equal to a preset threshold for beam failure recovery.

When the network device receives the contention-free random access request information that is used for beam failure recovery and that is sent by the terminal device, the network device sends beam failure recovery success response information to the terminal device. The beam failure recovery success response information is carried on a PDCCH, and a CORESET of the PDCCH is monitored to be associated with a search space set corresponding to a recovery search space identifier recoverySearchSpaceId.

When the terminal device detects the PDCCH in the CORESET associated with the search space set corresponding to the recovery search space identifier recoverySearchSpaceId, it may be understood that the terminal device successfully receives the beam recovery success response information sent by the network device, indicating that the beam failure recovery succeeds, and the beam recovery success response information is carried on the PDCCH.

In another possible implementation, a serving cell having a beam failure is a PCell or a PSCell, but the network device does not configure a CFRA resource for beam failure recovery or the network device configures a contention-based random access (Contention-based Random Access, CBRA) resource for beam recovery.

In this case, the terminal device may perform beam failure recovery based on the contention-based random access (Contention-based Random Access, CBRA) resource. The beam recovery procedure is as follows:
(1) The terminal device sends first information Msg1 (the Msg1 is mainly random pilot information, and is carried on a PRACH) to the network device.
(2) After receiving the Msg1 sent by the terminal device, the network device sends second information Msg2 (the Msg2 is carried on a PDCCH and a PDSCH, and includes random access response (Random access response, RAR) information) to the terminal device.
(3) After receiving the Msg2 sent by the network device, the terminal device sends third information Msg3 (the Msg3 is carried on a PUSCH scheduled by using an RAR uplink grant (Uplink grant), and mainly carries a unique identifier of a user) to the network device.
(4) After receiving the Msg3 sent by the terminal device, the network device sends fourth information Msg4 (the Msg4 is carried on the PDCCH and the PDSCH, and mainly carries contention resolution information, indicating contention resolution of random access) to the terminal device.

When the terminal device receives the Msg4 sent by the network device, it indicates that the beam failure recovery succeeds.

In another possible implementation, a serving cell having a beam failure is a PCell or a PSCell, and the network device configures a beam recovery procedure of the terminal device based on a 2-step random access resource. The beam recovery procedure is as follows:
(1) The terminal device sends MsgA (the MsgA is carried on a PRACH and a PUSCH, mainly for sending random access pilot information) to the network device.
(2) The network device successfully receives the MsgA sent by the terminal device, and sends MsgB (the MsgB is carried on a PDCCH and a PDSCH, and mainly includes RAR information) to the terminal device.

If the terminal device receives the PDCCH scrambled by a cell radio network temporary identifier (cell radio network temporary identifier, C-RNTI) carried in the MsgB sent by the network device, it indicates that the beam failure recovery succeeds.

When the network device explicitly configures a plurality of beam failure detection reference signal sets, if the terminal device detects that a beam failure occurs in one of the beam failure detection reference signal sets, beam failure recovery of the set is triggered, and an uplink resource is applied for by using an associated PUCCH SR. Then, the terminal sends beam failure information, new beam information, and the like by using the uplink resource that is applied for. The beam failure information and the new beam information may be sent by using a beam failure recovery medium access control control element (beam failure recovery MAC control element, BFR MAC CE) or an enhanced BFR MAC CE. When the network device explicitly configures a plurality of beam failure detection reference signal sets, the beam failure recovery may be referred to as the TRP-level beam failure recovery scenario. In the solution of this application, two beam failure detection reference signals are used as an example.

When the network device does not configure a beam failure detection reference signal set, if the network device configures a first CORESET and a second CORESET for the terminal device, and configures CORESETPoolIndex 0 and CORESETPoolIndex 1 respectively, the terminal device uses a periodic CSI-RS of a TCI state of a CORESET corresponding to CORESETPoolIndex i as an i^{th} beam failure detection reference signal set. When the terminal device detects that a beam failure occurs in one of the beam failure detection reference signal sets, beam failure recovery of the set is triggered, and an uplink resource is applied for by using an associated PUCCH SR. Then, the terminal sends beam failure information, new beam information, and the like by using the uplink resource that is applied for. The beam failure information and the new beam information may be sent by using a BFR MAC CE or an enhanced BFR MAC CE. In this case, the beam failure recovery may also be referred to as the TRP-level beam failure recovery scenario.

When the terminal device detects, in a primary cell (Primary cell, PCell) or a primary secondary cell (primary secondary cell, PSCell), that the two beam failure detection reference signal sets both fail, a random access procedure is triggered, which is the same as the cell-level beam failure recovery scenario.

When the terminal device detects, in the secondary cell (SCell), that the two beam failure detection reference signal sets both fail, if there is another cell whose uplink resource is used for sending a beam failure recovery request, an ID of the cell having the beam failure and new beam information are added to the uplink resource by using a BFR MAC CE or an enhanced BFR MAC CE; or if there is no other cell whose uplink resource is used for sending a beam failure recovery request, a dedicated uplink scheduling request for beam failure recovery is sent, and when the network device sends the uplink scheduling, the terminal device sends an ID of the cell having the beam failure and the new beam information by using a BFR MAC CE or an enhanced BFR MAC CE. In the two cases, when the terminal device receives DCI from the network device, a hybrid automatic repeat request (hybrid automatic repeat request, HARQ) ID in the DCI is the same as a HARQ ID for scheduling a MAC CE, and a new data indicator (new data indicator, NDI) is toggled, it indicates that beam failure recovery succeeds.

S203. The terminal device determines a TA for uplink transmission.

When the beam failure recovery of the terminal device succeeds, but the terminal device does not perform indication with new beam indication information, the terminal device may determine a first TA for uplink transmission in any one of the following manners.

### Method 1

In step S201, the network device configures the association relationship between the beam indication information and the TA and indicates the association relationship to the terminal device, so that the terminal device can determine the first TA for uplink transmission by using the association relationship between the beam indication information and the TA or the TAG.

Specifically, after a beam failure occurs on the terminal device, the terminal device determines a first reference signal (which may be referred to as q_{new}), where the first reference signal is a reference signal corresponding to a new beam of the terminal device after beam failure recovery. The first reference signal is a reference signal included in first beam indication information. The terminal device determines the first TA, where the first TA is a TA corresponding to the first beam indication information, and the first TA is used by the terminal device to perform uplink transmission after beam failure recovery.

For example, the terminal device may determine that q_{new} is the same as a reference signal included in one or more TCI states, to determine the one or more TCI states, select one TCI state (that is, an example of the first beam indication information) from the one or more TCI states, and determine that a TA corresponding to the selected TCI state is a TA for uplink transmission.

The terminal device may determine that q_{new} is the same as a reference signal included in one or more TCI states, or the terminal device determines one or more TCI states whose QCL-typeD is q_{new}.

In a possible implementation, the terminal device receives at least one piece of beam indication information (for example, a TCI state) sent by the network device, where the beam indication information includes one or more reference signals, and the at least one piece of beam indication information includes the first beam indication information.

Each of the at least one piece of beam indication information corresponds to a first identifier index of each piece of beam indication information, the at least one piece of beam indication information includes N pieces of beam indication information, each of the N pieces of beam indication information includes the first reference signal, the first beam indication information is beam indication information that is in the N pieces of beam indication information and that has a largest or smallest first identifier index, and N is a positive integer.

For example, there are a plurality of TCI states whose QCL-typeD is q_{new}, and one TCI state may be determined by using a default rule. For example, a TCI state with a smallest or largest TCI state index is determined, and a TA corresponding to the TCI state is used as a TA for uplink transmission.

The beam indication information is not limited to a TCI state in this application, or may be any one of a spatial relation, a UL TCI state, and a joint or DL TCI state.

For example, when the terminal device works in a joint unified TCI mode, the terminal device determines a joint or DL TCI state in which a reference signal whose QCL type is typeD is q_{new}, and performs uplink transmission by using a TA associated with the joint or DL TCI state.

For another example, when the terminal device works in a separate unified TCI mode, if the terminal device determines that QCL-typeD is a UL TCI state of q_{new}, or that an RS whose SRS satisfies QCL-typeD is q_{new}, and QCL-typeD of the UL TCI state is the SRS, the terminal device performs uplink transmission by using a TA associated with the UL TCI state.

### Method 2

In the beam failure recovery procedure in S202, a first TA is added to a message sent by the network device to the terminal device, so that the terminal device can determine the first TA for uplink transmission after beam failure recovery.

Specifically, in a possible implementation, the terminal device performs beam failure recovery based on CFRA.

In this case, the terminal device sends contention-based random access request information used for beam failure recovery, and the terminal device receives the beam recovery success response information sent by the network device. The beam recovery success response information includes first indication information, the first indication information indicates the first TA, and the first TA is used by the terminal device to perform uplink transmission after the beam failure recovery.

Specifically, the first indication information is carried in a downlink control signal format (DCI format) of a PDCCH of a cell radio network temporary identifier (Cell-Radio Network Temporary Identifier, C-RNTI) or a modulation and coding scheme cell radio network temporary identifier (modulation and coding scheme cell radio network temporary identifier, MCS-C-RNTI), and a CORESET of the PDCCH is monitored to be associated with a search space set corresponding to a recovery search space identifier recoverySearchSpaceId. After receiving the PDCCH, when performing uplink transmission with reference to q_{new}, the terminal performs uplink transmission by using TA information indicated by the first indication information. In other words, the beam recovery success response information may include the first indication information, and the beam recovery success response information is carried in a value of the PDCCH whose CORESET is associated with the search space set corresponding to the recovery search space identifier recoverySearchSpaceId. The first indication information may be any one or more of the following:
The first indication information indicates a TAG ID.

The first indication information may be a field whose length is 1 bit, and indicates a specific TA to be used after beam failure recovery. For example, when the network device configures two TA values or two TAGs for one serving cell of the terminal device, when the first indication information is 0, it indicates that a first TA is used after beam recovery or indicates a first TA or TAG of the serving cell; or when the first indication information is 1, it indicates that a second TA is used after beam recovery or indicates a second TA or TAG of the serving cell, and vice versa.

The first indication information may indicate that the value of the first TA is 0.

In another possible implementation, the terminal device performs beam failure recovery based on CBRA.

In this case, the terminal device sends contention-based random access request information used for beam failure recovery, and the terminal device receives random access response information (namely, second information). The random access response information includes first indication information, the first indication information indicates the first TA, and the first TA is used by the terminal device to perform uplink transmission after the beam failure recovery.

Optionally, after the terminal device receives the random access response information, the terminal device sends third information, and receives the contention resolution information (that is, fourth information), where the contention resolution information includes the first indication information.

Specifically, the first indication information is carried in the random access response information and/or the contention resolution information. After receiving the contention resolution information, the terminal device performs uplink transmission by using the TA information indicated by the first indication information when performing uplink transmission with reference to q_{new}. The first indication information may be any one or more of the following:
The first indication information indicates a TAG ID.

The first indication information may be a field whose length is 1 bit, and indicates a specific TA to be used after beam failure recovery. For example, when the network device configures two TA values or two TAGs for one serving cell of the terminal device, when the first indication information is 0, it indicates that a first TA is used after beam recovery or indicates a first TA or TAG of the serving cell; or when the first indication information is 1, it indicates that a second TA is used after beam recovery or indicates a second TA or TAG of the serving cell, and vice versa.

The first indication information may indicate that the value of the first TA is 0.

The first indication information may be carried on a PDCCH or a PDSCH in the second information. Specifically, the first indication information may be carried on a PDCCH for scheduling an RAR or in RAR signaling. The first indication information may also be carried on a PDCCH or a PDSCH in the fourth information. Specifically, the first indication information may be carried on a PDCCH for scheduling the contention resolution information, or may be carried in the contention resolution information. Optionally, a TA used for sending the third information may be a TA value carried in the RAR or a TA value corresponding to a TAG ID carried in the RAR, or uplink sending is performed by using TA=0.

In another possible implementation, the terminal device performs beam failure recovery based on 2-step CBRA. In this case, the terminal device sends MsgA used for beam failure recovery to the network device; and the terminal device monitors MsgB sent by the network device, where MsgB includes first indication information, the first indication information indicates a first TA, and the first TA is used by the terminal device to perform uplink transmission after the beam failure recovery.

Specifically, the first indication information may be carried on a PDCCH and/or a PDSCH of MsgB. For example, after the terminal device sends MsgA that includes a MAC CE scrambled by a C-RNTI, the terminal monitors the PDCCH scrambled by the C-RNTI. The PDCCH may include the first indication information. Optionally, the network device further sends RAR signaling, and the RAR signaling includes the first indication information. Optionally, when the network device sends a fallback RAR UL grant (fallback RAR UL grant) to the terminal device, the network device sends contention resolution information to the terminal device, where the contention resolution information is carried on a PDSCH, and the PDSCH includes the first indication information.

The first indication information may be any one or more of the following:
The first indication information indicates a TAG ID.

The first indication information may be a field whose length is 1 bit, and indicates a specific TA to be used after beam failure recovery. For example, when the network device configures two TA values or two TAGs for one serving cell of the terminal device, when the first indication information is 0, it indicates that a first TA is used after beam recovery or indicates a first TA or TAG of the serving cell; or when the first indication information is 1, it indicates that a second TA is used after beam recovery or indicates a second TA or TAG of the serving cell, and vice versa.

The first indication information may indicate that the value of the first TA is 0.

### Method 3

The network device configures an association relationship (that is, a second association relationship) between a reference signal in the first candidate beam reference signal set and a TA, and indicates the association relationship to the terminal device, so that the terminal device can determine the first TA for uplink transmission by using the association relationship between the reference signal and the TA or the TAG.

Specifically, when a beam failure occurs on the terminal device, the terminal device determines a first reference signal, where the first reference signal belongs to a first candidate beam reference signal set; and the terminal device determines the first TA based on the second association relationship, where the first TA is a TA corresponding to the first reference signal.

Optionally, reference signal received power (Reference signal received power, RSRP) of the first reference signal is greater than an RSRP threshold for beam failure recovery, so that the terminal determines that the first reference signal is a reference signal of a new beam after the beam failure recovery.

The second association relationship may be any one or more of the following:
The second association relationship may be that each reference signal of the first candidate beam reference signal set is configured to be associated with one TAG ID.

When the network device configures two TAs for one serving cell of the terminal device, the second association may be directly configuring or indicating whether each reference signal of the first candidate beam reference signal set is associated with a first TA or a second TA.

For example, a TAG ID is configured in a BFR-SSB-Resource or a BFR-CSI-RS-Resource, or is directly configured to indicate the first TA or the second TA. Alternatively, the network device configures the first candidate beam set to include two reference signal groups (group), each reference signal group includes one or more reference signals, and the network device configures each group to be associated with one TAG ID or the first TA or the second TA. Alternatively, a protocol specifies a rule that a first group is associated with the first TA or a smallest/largest TAG ID of the cell and a second group is associated with the second TA/or the smallest/largest TAG ID of the cell. Alternatively, a protocol specifies a rule that the first X RSs are associated with the first TA, and the last Y RSs are associated with the second TA.

The foregoing three methods are applicable to the cell-level beam failure recovery scenario and the TRP-level beam failure recovery scenario. The following describes three methods for determining a first TA that are applicable to the TRP-level beam failure recovery scenario.

A failure occurs in one of beam failure detection reference signal sets of the terminal device. When beam failure recovery of the set succeeds, but before a new beam is indicated, the terminal device may determine a TA for uplink transmission in any one of the following manners.

### Method 4

The network device configures an association relationship (namely, a third association relationship) between a beam failure detection reference signal set and a TAG/TA, and determines the first TA for uplink transmission by using the association relationship between the beam failure detection reference signal set and the TAG/TA.

In a possible implementation, when a beam failure occurs on at least one reference signal in the first beam failure detection reference signal set of the terminal device, the terminal device determines, based on the third association relationship, that the first beam failure detection reference signal set is associated with the first TA; and when a failure occurs on the first beam failure detection reference signal set, the terminal performs beam failure recovery on the first beam failure detection set and then performs uplink transmission by using the first TA.

The third association relationship is an association relationship between at least one beam failure detection reference signal set and a TA. The third association relationship may be any one or more of the following:
The third association relationship may be an association relationship between each beam failure detection reference signal set and a TAG ID. For example, the network device configures two TAs and two beam failure detection reference signal sets for one serving cell of the terminal device, where a first beam failure detection reference signal set is associated with a TAG ID0, and a second beam failure detection reference signal set is associated with a TAG ID1.

The third association relationship may be an association relationship between at least one beam failure detection reference signal set and a TAG ID. For example, the network device configures two TAs and two beam failure detection reference signal sets for one serving cell of the terminal device, and configures only one beam failure detection reference signal set to be associated with one TAG ID. In this case, the terminal device may consider that the other beam failure detection reference signal set is associated with the other TAG ID.

The third association relationship may be an association relationship between each beam failure detection reference signal set and a first TA or a second TA. For example, the network device configures two TAs and two beam failure detection reference signal sets for one serving cell of the terminal device, where the first beam failure detection reference signal set is associated with the first TA, and the second beam failure detection reference signal set is associated with the second TA.

The third association relationship may be an association relationship between at least one beam failure detection reference signal set and a TAG ID. For example, the network device configures two TAs and two beam failure detection reference signal sets for one serving cell of the terminal device, and configures only one beam failure detection reference signal set to be associated with a first TA. In this case, the terminal device may consider that the other beam failure detection reference signal set is associated with a second TA.

The third association relationship may be an association relationship between each reference signal in each beam failure detection reference signal set and a TAG ID, or a first TA, or a second TA.

In another possible implementation, the network device configures an association relationship (that is, a fourth association relationship) between a candidate beam reference signal set and a TAG/TA. The terminal device determines, based on the fourth association relationship, that a first candidate beam reference signal corresponds to a first TA. The terminal device determines a first reference signal when a beam failure occurs, where the first reference signal belongs to the first candidate beam reference signal set, and the terminal performs uplink transmission by using the first TA.

The fourth association relationship is an association relationship between at least one candidate beam reference signal set and a TA. The fourth association relationship may be any one or more of the following:
The fourth association relationship may be an association relationship between each candidate beam reference signal set and a TAG ID. For example, the network device configures two TAs and two candidate beam reference signal sets for one serving cell of the terminal device, where a first candidate beam reference signal set is associated with a TAG ID0, and a second candidate beam reference signal set is associated with a TAG ID1.

The fourth association relationship may be an association relationship between at least one candidate beam reference signal set and a TAG ID. For example, the network device configures two TAs and two candidate beam reference signal sets for one serving cell of the terminal device, and configures only one candidate beam reference signal set to be associated with one TAG ID. In this case, the terminal device may consider that the other candidate beam reference signal set is associated with the other TAG ID.

The fourth association relationship may be an association relationship between each candidate beam reference signal set and a first TA or a second TA. For example, the network device configures two TAs and two candidate beam reference signal sets for one serving cell of the terminal device, where a first candidate beam reference signal set is associated with the first TA, and a second candidate beam reference signal set is associated with the second TA.

The fourth association relationship may be an association relationship between at least one candidate beam reference signal set and a TAG ID. For example, the network device configures two TAs and two candidate beam reference signal sets for one serving cell of the terminal device, and configures only one of the candidate beam reference signal sets to be associated with a first TA. In this case, the terminal device may consider that the other candidate beam reference signal set is associated with a second TA.

The fourth association relationship may be an association relationship between each reference signal in each candidate beam reference signal set and a TAG ID or a first TA or a second TA.

In still another possible implementation, the network device configures a third association relationship and a fifth association relationship for the terminal device, where the third association relationship is an association relationship between at least one beam failure detection reference signal set and a TA, and the fifth association relationship is a correspondence between a beam failure detection reference signal set and a candidate beam reference signal set.

Specifically, when a beam failure occurs on the terminal device, the terminal device determines a first reference signal, where the first reference signal belongs to the first candidate beam reference signal set. The terminal device determines, based on the fifth association relationship, that the first candidate beam reference signal set corresponds to the first beam failure detection reference signal set, and the terminal device determines, based on the third association relationship, that the first beam failure detection reference signal set is associated with the first TA. In this case, the terminal device determines the first TA.

In still another possible implementation, the network device configures a fourth association relationship and a fifth association relationship for the terminal device, where the fourth association relationship is an association relationship between at least one candidate beam reference signal set and a TA, and the fifth association relationship is a correspondence between a beam failure detection reference signal set and a candidate beam reference signal set.

Specifically, if a beam failure occurs on at least one reference signal in the first beam failure detection reference signal set of the terminal device, the terminal device determines, based on the fifth association relationship, that the first beam failure detection reference signal set corresponds to the first candidate beam reference signal set, and the terminal device determines, based on the third association relationship, that the first candidate beam reference signal set is associated with the first TA. In this case, the terminal device determines the first TA.

In a possible implementation, the network device may indicate TAG or TA information by using BFD-RS Indication MAC CE signaling. The BFD-RS Indication MAC CE is used for activating a BFD-RS in a beam failure detection reference signal set, where an R field is now a reserved field, and an S field is used for indicating whether BFD-RS ID1 exists, that is, whether to activate another reference signal in the beam failure detection reference signal set for beam failure detection. Set1 and Set2 respectively correspond to a first beam failure detection reference signal set and a second beam failure detection reference signal set.

Optionally, each BFD-RS is associated with one TA. In this case, in the BFD-RS Indication MAC CE signaling, a TAG ID or an identifier is indicated for each activated BFD-RS, and the identifier is used for indicating a first TA or a second TA.

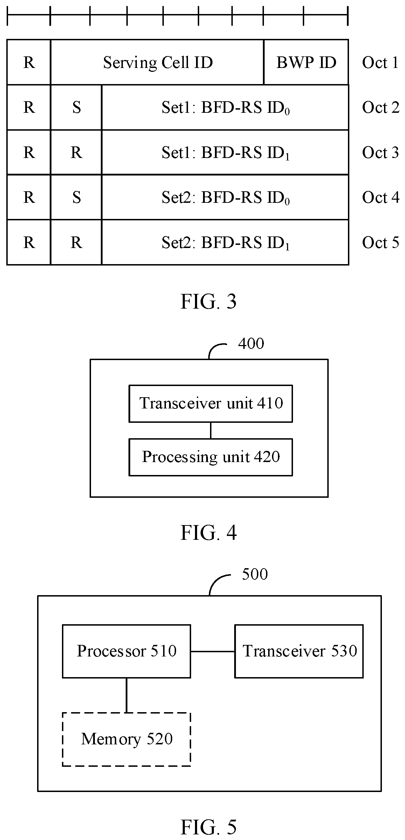

Specifically, as shown in FIG. 3, one "R" field before each BFD-RS is used for indicating a specific TA. When the field is 0, it indicates that the first TA is indicated; or when the field is 1, it indicates that the second TA is indicated, and vice versa. For example, if the "R" field before the first BFD-RS ID0 of Set1 is 0, it indicates that the TA corresponding to the BFD-RS ID0 is the first TA; or if the "R" field before the first BFD-RS ID0 of Set1 is 1, it indicates that the TA corresponding to the BFD-RS ID0 is the second TA, and vice versa. For another example, if a first "R" field or a second "R" field before the second BFD-RS ID0 of Set1 is used for indicating a TA, when the first "R" field or the second "R" field is 0, it indicates that the TA corresponding to the BFD-RS ID1 is the first TA; or when the first "R" field is 1 or the second "R" field, it indicates that the TA corresponding to the BFD-RS ID1 is the second TA, and vice versa.

Optionally, each BFD-RS set is associated with one TA. In this case, in the BFD-RS Indication MAC CE signaling, a TAG ID or an identifier is indicated for each BFD-RS set, and the identifier is used for indicating a first TA or a second TA.

Specifically, as shown in FIG. 3, an "R" field before the first BFD-RS ID0 of Set1 and Set2 is used for indicating a TA value. When the field is 0, it indicates that the first TA is indicated; or when the field is 1, it indicates that the second TA is indicated, and vice versa. For example, if the "R" field before the first BFD-RS ID0 of Set1 is 0, it indicates that a TA corresponding to Set1 is the first TA, that is, after a beam failure occurs in the BFD-RS ID0 and the BFD-RS ID1, each TA used for uplink transmission after the beam failure recovery is the first TA; or if the "R" field before the first BFD-RS ID0 of Set1 is 1, it indicates that a TA corresponding to Set1 is the second TA, that is, after a beam failure occurs in the BFD-RS ID0 and the BFD-RS ID1, each TA used for uplink transmission after the beam failure recovery is the second TA.

Optionally, the first "R" field in the signaling indicates that a specified TA is used after a beam failure of any beam failure detection reference signal set, or indicates whether to perform uplink sending by using TA=0. For example, when the first "R" field in the signaling indicates the first TA or the second TA, if the field indicates 0, it indicates that after a beam failure occurs in any BFD-RS set in Set1 and Set2, each TA used for uplink transmission after beam failure recovery is the first TA; or if the field indicates 1, it indicates that after a beam failure occurs in any BFD-RS set in Set1 and Set2, each TA used for uplink transmission after beam failure recovery is the second TA, and vice versa. For another example, when the first "R" field in the signaling indicates that the TA is 0 after the beam failure recovery, if the field indicates 1, it indicates that after a beam failure occurs in any BFD-RS set in Set1 and Set2, each TA used for uplink transmission after beam failure recovery is 0, and vice versa.

### Method 5

When the network device does not explicitly configure a beam failure detection reference signal set, if the terminal device detects that a periodic CSI-RS of a TCI state of a PDCCH fails to be sent, after the terminal device performs beam failure recovery, the terminal performs uplink transmission by using a TA associated with the TCI state of the PDCCH that is received before the beam failure.

Specifically, in a possible implementation, the network device does not configure a beam failure detection reference signal set. If the terminal device configures CORESETPoolIndex 0 and CORESETPoolIndex 1 respectively for a first CORESET and a second CORESET, the terminal device uses an RS of a TCI state of a CORESET corresponding to CORESETPoolIndex i as an i^{th} beam failure detection reference signal set. When a beam failure occurs on the i^{th} beam failure detection reference signal set of the terminal device, after the beam failure recovery succeeds, a TA associated with a TCI state of a CORESET corresponding to the CORESETPoolIndex i is used when uplink transmission is performed with reference to a first reference signal.

In another possible implementation, the network device does not configure a beam failure detection reference signal set. If the terminal device configures CORESETPoolIndex 1 only for the second CORESET, the terminal device determines RSs of TCI states corresponding to the first CORESET and the second CORESET as the first and the second beam failure detection reference signal sets. If a beam failure occurs in the first beam failure detection reference signal set of the terminal device, after beam failure recovery succeeds, a TA associated with a TCI state of the first CORESET is used when uplink transmission is performed by using q_{new}; or before beam failure recovery succeeds, a TA associated with a TCI state of the second CORESET is used.

In another possible implementation, if the network device neither configures a beam failure detection reference signal set nor configures a CORESETPoolIndex, or configures only a CORESETPoolIndex 0, after the beam failure recovery succeeds, the terminal device uses a TA associated with a TCI state of a PDCCH before the beam failure.

### Method 6

After beam failure recovery occurs on the terminal device, the terminal device performs uplink transmission by using a TA sent on each uplink channel before a beam failure. Specifically, after a beam failure occurs on the terminal, the terminal determines q_{new} to perform beam failure recovery. When the terminal device sends an SRS based on q_{new} and before new beam indication is performed, uplink transmission is performed based on a TA of the SRS before the beam failure. When the terminal device sends an PUCCH based on q_{new} and before new beam indication is performed, uplink transmission is performed based on a TA of the PUCCH before the beam failure. When the terminal device sends an PUSCH based on q_{new} and before new beam indication is performed, uplink transmission is performed based on a TA of the PUSCH before the beam failure.

When the terminal device works in a Unified TCI framework, after beam failure recovery occurs on the terminal device, the terminal device uses a TA associated with beam indication information for uplink transmission before the beam failure. In other words, the terminal device determines a first TA, where the first TA is a TA corresponding to third beam indication information, and the third beam indication information is beam indication information that is used for uplink transmission before a beam failure occurs on the terminal device.

Specifically, before a beam failure occurs, the terminal device performs uplink transmission by using the third beam indication information, and a TA corresponding to the third beam indication information is the first TA. After the beam failure recovery succeeds, if the terminal device determines that uplink transmission is performed by using a first reference signal, a TA used for performing uplink transmission by using the first reference signal is the first TA.

It should be understood that before beam failure on the terminal device, the terminal device performs uplink transmission with two stations in a first TCI state and a second TCI state respectively. After one of the beams fails and is recovered, one of the TCI states is updated to use q_{new} for transmission. For example, the first TCI state is updated to use q_{new} for transmission. When q_{new} is used for uplink transmission, the terminal device uses a TA associated with the first TCI state.

Optionally, when two TAs are configured for each serving cell of the terminal device, the terminal may be limited to not expect to be configured with cell-level beam failure recovery.

Optionally, when two TAs are configured for each serving cell of the terminal device, the terminal may be limited to expect to be explicitly configured with two beam failure detection sets.

For the foregoing method 200, the terminal device determines the first TA in the foregoing manner, and the first TA may be valid in a first time period.

A start moment of the first time period is a first moment, and the first moment is any one of the following moments:
a moment after first duration after beam failure recovery success of the terminal device;
a moment after second duration after the terminal device receives beam recovery success response information;
a moment after third duration after the terminal device performs beam failure recovery based on contention-based random access and the terminal device receives a contention resolution message;
a moment at 28 symbols after a last symbol in a first physical downlink control channel PDCCH received by the terminal device in a recovery space search set; and
a moment after fifth duration after the terminal device sends a first beam failure recovery medium access control control element BFR MAC CE, where
at the moment at the 28 symbols after the last symbol in the first PDCCH received by the terminal device, the first PDCCH and a downlink control information DCI format for scheduling a first physical uplink shared channel PUSCH have a same hybrid automatic repeat request HARQ process, and an NDI field is toggled.

In a possible implementation, an end moment of the first time period is a second moment, and the second moment is any one of the following moments:
a moment after fourth duration after the terminal device receives DCI signaling used for indicating new beam indication information;
a moment after fifth duration after the terminal device sends first acknowledgment (acknowledgment, ACK) feedback information, where the first ACK feedback information is used for indicating that the terminal successfully receives the DCI signaling used for beam indication;
a moment after seventh duration after the terminal device receives medium access control control element MAC CE signaling used for activating beam indication information; and
a moment after eighth duration after the terminal device sends second ACK feedback information, where the second ACK feedback information is used for indicating that the terminal successfully receives the MAC CE signaling used for activating beam indication information.

FIG. 4 is a block diagram of a communication apparatus 400 according to an embodiment of this application. The apparatus 400 includes a transceiver unit 410 and a processing unit 420. The transceiver unit 410 may communicate with the outside, and the processing unit 420 is configured to perform data processing. The transceiver unit 410 may also be referred to as a communication interface or a communication unit.

In a possible implementation, the apparatus 400 may further include a storage unit. The storage unit may be configured to store instructions and/or data. The processing unit 420 may read the instructions and/or the data in the storage unit.

The apparatus 400 may be configured to perform an action performed by the base station in the foregoing method embodiments. In this case, the apparatus 400 may be the base station or a component that may be disposed in the base station. The transceiver unit 410 is configured to perform a receiving/sending-related operation on the base station side in the foregoing method embodiments. The processing unit 420 is configured to perform a processing-related operation on the base station side in the foregoing method embodiments.

Alternatively, the apparatus 400 may be configured to perform an action performed by the terminal device in the foregoing method embodiments. In this case, the apparatus 400 may be the terminal device or a component that may be disposed in the terminal device. The transceiver unit 410 is configured to perform a receiving/sending-related operation on the terminal device side in the foregoing method embodiments. The processing unit 420 is configured to perform a processing-related operation on the terminal device side in the foregoing method embodiments.

As shown in FIG. 5, an embodiment of this application further provides a communication apparatus 500. The communication apparatus 500 includes a processor 510. The processor 510 is coupled to a memory 520. The memory 520 is configured to store a computer program or instructions and/or data. The processor 510 is configured to execute the computer program or the instructions and/or the data stored in the memory 520, to perform the methods in the foregoing method embodiments.

In a possible implementation, the communication apparatus 500 includes one or more processors 510.

In a possible implementation, as shown in FIG. 5, the communication apparatus 500 may further include the memory 7520.

In a possible implementation, the communication apparatus 500 may include one or more memories 520.

In a possible implementation, the memory 520 and the processor 510 may be integrated together, or disposed separately.

In a possible implementation, as shown in FIG. 5, the wireless communication apparatus 500 may further include a transceiver 7530. The transceiver 530 is configured to receive and/or send a signal. For example, the processor 510 is configured to control the transceiver 530 to receive and/or send the signal.

In a solution, the communication apparatus 500 is configured to implement an operation performed by the base station in the foregoing method embodiments.

For example, the processor 510 is configured to implement a processing-related operation performed by the base station in the foregoing method embodiments, and the transceiver 530 is configured to implement a receiving/sending-related operation performed by the base station in the foregoing method embodiments.

In another solution, the communication apparatus 500 is configured to implement an operation performed by the terminal device in the foregoing method embodiments.

For example, the processor 510 is configured to implement a processing-related operation performed by the terminal device in the foregoing method embodiments, and the transceiver 530 is configured to implement a receiving/sending-related operation performed by the terminal device in the foregoing method embodiments.

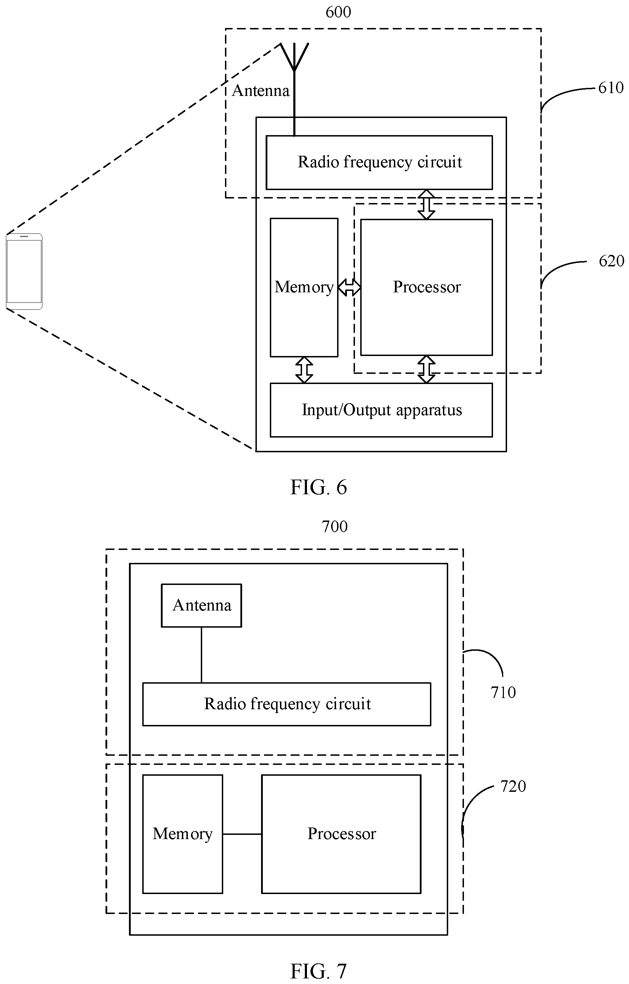

An embodiment of this application further provides a communication apparatus 600. The communication apparatus 600 may be a terminal device or may be a chip. The communication apparatus 600 may be configured to perform an operation performed by the terminal device in the foregoing method embodiments. When the communication apparatus 600 is a terminal device, FIG. 6 is a simplified diagram of a structure of the terminal device. For ease of understanding and illustration, in FIG. 6, the terminal device is, for example, a mobile phone. As shown in FIG. 6, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 6 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 6, the terminal device includes a transceiver unit 610 and a processing unit 620. The transceiver unit 610 may also be referred to as a transceiver, a transceiver machine, a transceiver apparatus, or the like. The processing unit 620 may also be referred to as a processor, a processing board, a processing module, a processing apparatus, or the like.

In a possible implementation, a component that is in the transceiver unit 610 and that is configured to implement a receiving function may be considered as a receiving unit, and a component that is in the transceiver unit 610 and that is configured to implement a sending function may be considered as a sending unit. In other words, the transceiver unit 610 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

For example, in an implementation, the transceiver unit 610 is configured to perform a receiving operation of the terminal device. The processing unit 620 is configured to perform a processing action on the terminal device side.

It should be understood that FIG. 6 is merely an example and not limitation. The foregoing terminal device including the transceiver unit and the processing unit may not depend on the structure shown in FIG. 6.

When the communication apparatus 600 is a chip, the chip includes a transceiver unit and a processing unit. The transceiver unit may be an input/output circuit or a communication interface. The processing unit may be a processor, a microprocessor, or an integrated circuit integrated on the chip. The input circuit may be an input pin, the output circuit may be an output pin, and a processing circuit may be a transistor, a gate circuit, a trigger, various logic circuits, and the like. An input signal received by the input circuit may be received and input by, for example without limitation to, a receiver, and a signal output by the output circuit may be output to and transmitted by, for example without limitation to, a transmitter. In addition, the input circuit and the output circuit may be different circuits or may be a same circuit. In this case, the circuit is used as the input circuit and the output circuit at different moments.

An embodiment of this application further provides a communication apparatus 700. The communication apparatus 700 may be a base station or may be a chip. The communication apparatus 700 may be configured to perform an operation performed by the base station in the foregoing method embodiments.

When the communication apparatus 700 is a base station, FIG. 7 is a simplified diagram of a structure of the base station. The base station includes a part 710 and a part 720. The part 710 is mainly configured to receive and send a radio frequency signal, and perform conversion between the radio frequency signal and a baseband signal. The part 720 is mainly used for baseband processing, base station control, and the like. The part 710 may be usually referred to as a transceiver unit, a transceiver machine, a transceiver circuit, a transceiver, or the like. The part 720 is usually a control center of the base station, may usually be referred to as a processing unit, and is configured to control the base station to perform a processing operation on a network device side in the foregoing method embodiments.

The transceiver unit in the part 710 may also be referred to as a transceiver machine, a transceiver, or the like, and includes an antenna and a radio frequency circuit. The radio frequency circuit is mainly configured to perform radio frequency processing. In a possible implementation, in the part 710, a component configured to implement a receiving function may be considered as a receiving unit, and a component configured to implement a sending function may be considered as a sending unit. In other words, the part 710 includes the receiving unit and the sending unit. The receiving unit may also be referred to as a receiver machine, a receiver, a receive circuit, or the like. The sending unit may be referred to as a transmitter machine, a transmitter, a transmit circuit, or the like.

The part 720 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver unit in the part 710 is configured to perform a sending/receiving-related step performed by the base station in the embodiment, and the part 720 is configured to perform a processing-related step performed by the base station.

It should be understood that FIG. 7 is merely an example rather than a limitation, and the network device including the transceiver unit and the processing unit may not depend on the structure shown in FIG. 7.

When the communication apparatus 700 is a chip, the chip includes a transceiver unit and a processing unit. The transceiver unit may be an input/output circuit or a communication interface. The processing unit is a processor, a microprocessor, or an integrated circuit integrated on the chip. The input circuit may be an input pin, the output circuit may be an output pin, and a processing circuit may be a transistor, a gate circuit, a trigger, various logic circuits, and the like. An input signal received by the input circuit may be received and input by, for example without limitation to, a receiver, and a signal output by the output circuit may be output to and transmitted by, for example without limitation to, a transmitter. In addition, the input circuit and the output circuit may be different circuits or may be a same circuit. In this case, the circuit is used as the input circuit and the output circuit at different moments.

An embodiment of this application further provides a computer-readable storage medium. The computer-readable storage medium stores computer instructions used to implement the method performed by the terminal device or the method performed by the base station in the foregoing method embodiments.

For example, when a computer program is executed by a computer, the computer is enabled to implement the method performed by the terminal device or the method performed by the base station in the foregoing method embodiments.

An embodiment of this application further provides a computer program product including instructions. When the instructions are executed by a computer, the computer is caused to implement the method performed by the terminal device or the method performed by the network device in the foregoing method embodiments.

An embodiment of this application further provides a communication system. The communication system includes the base station and the terminal device in the foregoing embodiments.

For explanations and beneficial effect of related content of any wireless communication apparatus provided above, refer to the corresponding method embodiment provided above. Details are not described herein.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be performed by a terminal device or a base station, or may be performed by a functional module that is in the terminal device or the base station and that can invoke and execute a program.

Aspects or features in embodiments of this application may be implemented as a method, an apparatus, or a product that uses standard programming and/or engineering technologies. As used herein, the term "artificial article" may encompass a computer program accessible from any computer-readable device, carrier, or medium. For example, a computer-readable medium may include, but is not limited to: a magnetic storage device (for example, a hard disk, a floppy disk, or a magnetic tape), an optical disc (for example, a compact disc (compact disc, CD), a digital versatile disc (digital versatile disc, DVD), or the like), a smart card, and a flash memory device (for example, an erasable programmable read-only memory (erasable programmable read-only memory, EPROM), a card, a stick, or a key drive).

The various storage media described herein may represent one or more devices and/or other machine-readable media for storing information. The term "machine-readable medium" may include, but is not limited to: radio channels and various other media capable of storing, containing, and/or carrying instructions and/or data.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application. Therefore, the protection scope of this application shall be subject to the protection scope of the claims.

## Claims

1. A communication method, comprising:
sending, by a terminal device, a physical random access channel PRACH;
receiving, by the terminal device, random access response RAR information, wherein the RAR information comprises first indication information, the first indication information indicates timing advance group TAG information, and the RAR is a response to the PRACH; and
sending, by the terminal device, third information, wherein the third information is carried on a physical uplink shared channel PUSCH scheduled by an uplink grant of the RAR information, and a timing advance TA used for sending the third information is a TA corresponding to a TAG indicated by the first indication information.

2. The method according to claim 1, wherein two TAGs are configured in a serving cell of the terminal device; and
that the first indication information indicates timing advance group TAG information comprises: the first indication information indicates one of the two TAGs of the serving cell.

3. The method according to claim 2, wherein
when being 0, the first indication information indicates a first TAG of the serving cell, and
when being 1, the first indication information indicates a second TAG of the serving cell; or
when being 1, the first indication information indicates a first TAG of the serving cell, and
when being 0, the first indication information indicates a second TAG of the serving cell.

4. A communication method, comprising:
receiving, by a network device, a physical random access channel PRACH;
sending, by the network device, random access response RAR information, wherein the RAR information comprises first indication information, the first indication information indicates timing advance group TAG information, and the RAR is a response to the PRACH; and
receiving, by the network device, third information, wherein the third information is carried on a physical uplink shared channel PUSCH scheduled by an uplink grant of the RAR information, and a timing advance TA used for sending the third information is a TA corresponding to a TAG indicated by the first indication information.

5. The method according to claim 4, wherein two TAGs are configured in a serving cell of a terminal device; and
that the first indication information indicates timing advance group TAG information comprises: the first indication information indicates one of the two TAGs of the serving cell.

6. The method according to claim 5, wherein
when being 0, the first indication information indicates a first TAG of the serving cell, and
when being 1, the first indication information indicates a second TAG of the serving cell; or
when being 1, the first indication information indicates a first TAG of the serving cell, and
when being 0, the first indication information indicates a second TAG of the serving cell.

7. A communication method, comprising:
after a beam failure occurs on a terminal device, determining, by the terminal device, a first reference signal, wherein the first reference signal is a reference signal corresponding to a new beam of the terminal device after beam failure recovery, and the first reference signal is a reference signal comprised in first beam indication information; and
determining, by the terminal device, a first TA, wherein the first TA is a TA corresponding to the first beam indication information, and the first TA is used by the terminal device to perform uplink transmission after beam failure recovery.

8. The method according to claim 7, wherein determining, by the terminal device, the first TA comprises:
determining, by the terminal device, the first TA based on a first association relationship, wherein the first association relationship is an association relationship between at least one piece of beam indication information and a TA, and the at least one piece of beam indication information comprises the first beam indication information.

9. The method according to claim 7 or 8, wherein the method further comprises:
receiving, by the terminal device, configuration information of at least one piece of beam indication information, wherein the beam indication information comprises one or more reference signals, and the at least one piece of beam indication information comprises the first beam indication information.

10. The method according to any one of claims 7 to 9, wherein the first association relationship is configured by a network device.

11. The method according to any one of claims 8 to 10, wherein the method further comprises:
each of the at least one piece of beam indication information corresponds to a first identifier index of each piece of beam indication information, the at least one piece of beam indication information comprises N pieces of beam indication information, each of the N pieces of beam indication information comprises the first reference signal, the first beam indication information is beam indication information that is in the N pieces of beam indication information and that has a largest or smallest first identifier index, and N is a positive integer.

12. The method according to any one of claims 7 to 11, wherein the first TA is used for performing uplink transmission in a first time period, a start moment of the first time period is a first moment, and the first moment is any one of the following moments:
a moment after first duration after beam failure recovery success of the terminal device;
a moment after second duration after the terminal device receives beam recovery success response information;
a moment after third duration after the terminal device performs beam failure recovery based on contention-based random access and the terminal device receives a contention resolution message;
a moment at 28 symbols after a last symbol in a first physical downlink control channel PDCCH received by the terminal device in a recovery space search set; and
a moment after fifth duration after the terminal device sends a first beam failure recovery medium access control control element BFR MAC CE, wherein
at the moment at the 28 symbols after the last symbol in the first PDCCH received by the terminal device, the first PDCCH and a downlink control information DCI format for scheduling a first physical uplink shared channel PUSCH have a same hybrid automatic repeat request HARQ process, and a new data indicator NDI field is toggled.

13. The method according to claim 12, wherein an end moment of the first time period is a second moment, and the second moment is any one of the following moments:
a moment after fourth duration after the terminal device receives DCI signaling used for indicating new beam indication information;
a moment after fifth duration after the terminal device sends first acknowledgment ACK feedback information, wherein the first ACK feedback information is used for indicating that the terminal successfully receives the DCI signaling used for indicating the new beam indication information;
a moment after seventh duration after the terminal device receives medium access control control element MAC CE signaling used for activating beam indication information; and
a moment after eighth duration after the terminal device sends second ACK feedback information, wherein the second ACK feedback information is used for indicating that the terminal successfully receives the MAC CE signaling used for activating beam indication information.

14. A communication method, comprising:
sending, by a terminal device, contention-free random access request information used for beam failure recovery, and
receiving, by the terminal device, beam recovery success response information, wherein the beam recovery success response information comprises first indication information, the first indication information indicates a first TA, the first TA is used by the terminal device to perform uplink transmission after beam failure recovery, and the beam recovery success response information is carried on a PDCCH associated with a recovery search space set; or
sending, by the terminal device, contention-based random access request information used for beam failure recovery, and
receiving, by the terminal device, random access response information, wherein the random access response information comprises first indication information, the first indication information indicates a first TA, and the first TA is used by the terminal device to perform uplink transmission after beam failure recovery.

15. The method according to claim 14, wherein after receiving, by the terminal device, the random access response information, the method further comprises:
sending, by the terminal device, third information, wherein the third information is used for carrying an identifier of the terminal device; and
receiving, by the terminal device, contention resolution information, wherein the contention resolution information comprises the first indication information.

16. The method according to claim 14 or 15, wherein the first TA is used for performing uplink transmission in a first time period, a start moment of the first time period is a first moment, and the first moment is any one of the following moments:
a moment after first duration after beam failure recovery success of the terminal device;
a moment after second duration after the terminal device receives beam recovery success response information;
a moment after third duration after the terminal device performs beam failure recovery based on contention-based random access and the terminal device receives a contention resolution message;
a moment at 28 symbols after a last symbol in a first physical downlink control channel PDCCH received by the terminal device in a recovery space search set; and
a moment after fifth duration after the terminal device sends a first beam failure recovery medium access control control element BFR MAC CE, wherein
at the moment at the 28 symbols after the last symbol in the first PDCCH received by the terminal device, the first PDCCH and a downlink control information DCI format for scheduling a first physical uplink shared channel PUSCH have a same hybrid automatic repeat request HARQ process, and an NDI field is toggled.

17. The method according to claim 16, wherein an end moment of the first time period is a second moment, and the second moment is any one of the following moments:
a moment after fourth duration after the terminal device receives DCI signaling used for indicating new beam indication information;
a moment after fifth duration after the terminal device sends first acknowledgment ACK feedback information, wherein the first ACK feedback information is used for indicating that the terminal successfully receives the DCI signaling used for beam indication;
a moment after seventh duration after the terminal device receives medium access control control element MAC CE signaling used for activating beam indication information; and
a moment after eighth duration after the terminal device sends second ACK feedback information, wherein the second ACK feedback information is used for indicating that the terminal successfully receives the MAC CE signaling used for activating beam indication information.

18. A communication method, comprising:
a beam failure occurs on at least one reference signal in a first beam failure detection reference signal set of a terminal device, the first beam failure detection reference signal set corresponds to a first control resource set pool index CORESETpoolindex, the first control resource set pool index corresponds to second beam indication information, and the second beam indication information is used by the terminal device to monitor a physical downlink control channel PDCCH associated with the first CORESETpoolindex before the beam failure; and
determining, by the terminal device, a first TA, wherein the first TA is a TA corresponding to the second beam indication information, and the first TA is used by the terminal device to perform uplink transmission after beam failure recovery.

19. The method according to claim 18, wherein the first TA is used for performing uplink transmission in a first time period, a start moment of the first time period is a first moment, and the first moment is any one of the following moments:
a moment after first duration after beam failure recovery success of the terminal device;
a moment after second duration after the terminal device receives beam recovery success response information;
a moment after third duration after the terminal device performs beam failure recovery based on contention-based random access and the terminal device receives a contention resolution message;
a moment at 28 symbols after a last symbol in a first physical downlink control channel PDCCH received by the terminal device in a recovery space search set; and
a moment after fifth duration after the terminal device sends a first beam failure recovery medium access control control element BFR MAC CE, wherein
at the moment at the 28 symbols after the last symbol in the first PDCCH received by the terminal device, the first PDCCH and a downlink control information DCI format for scheduling a first physical uplink shared channel PUSCH have a same hybrid automatic repeat request HARQ process, and an NDI field is toggled.

20. The method according to claim 19, wherein an end moment of the first time period is a second moment, and the second moment is any one of the following moments:
a moment after fourth duration after the terminal device receives DCI signaling used for indicating new beam indication information;
a moment after fifth duration after the terminal device sends first acknowledgment ACK feedback information, wherein the first ACK feedback information is used for indicating that the terminal successfully receives the DCI signaling used for beam indication;
a moment after seventh duration after the terminal device receives medium access control control element MAC CE signaling used for activating beam indication information; and
a moment after eighth duration after the terminal device sends second ACK feedback information, wherein the second ACK feedback information is used for indicating that the terminal successfully receives the MAC CE signaling used for activating beam indication information.

21. A communication method, comprising:
receiving, by a network device, contention-free random access request information used for beam failure recovery, and
sending, by the network device, beam recovery success response information, wherein the beam recovery success response information comprises first indication information, the first indication information indicates a first TA, the first TA is used by a terminal device to perform uplink transmission after beam failure recovery, and the beam recovery success response information is carried on a PDCCH associated with a recovery search space set; or
receiving, by the network device, contention-based random access request information used for beam failure recovery, and
sending, by the network device, random access response information, wherein the random access response information comprises first indication information, the first indication information indicates a first TA, and the first TA is used by the terminal device to perform uplink transmission after beam failure recovery.

22. The method according to claim 21, wherein after sending, by the network device, the random access response information, the method further comprises:
receiving and sending, by the network device, third information, wherein the third information is used for carrying an identifier of the terminal device; and
sending, by the network device, contention resolution information, wherein the contention resolution information comprises the first indication information.

23. A communication apparatus, comprising:
a sending unit, configured to send a physical random access channel PRACH; and
a receiving unit, configured to receive random access response RAR information, wherein the RAR information comprises first indication information, the first indication information indicates timing advance group TAG information, and the RAR is a response to the PRACH, wherein
the sending unit is further configured to send third information, wherein the third information is carried on a physical uplink shared channel PUSCH scheduled by an uplink grant of the RAR information, and a timing advance TA used for sending the third information is a TA corresponding to a TAG indicated by the first indication information.

24. The apparatus according to claim 23, wherein two TAGs are configured in a serving cell of the apparatus; and
that the first indication information indicates timing advance group TAG information comprises: the first indication information indicates one of the two TAGs of the serving cell.

25. The apparatus according to claim 24, wherein
when being 0, the first indication information indicates a first TAG of the serving cell, and
when being 1, the first indication information indicates a second TAG of the serving cell; or
when being 1, the first indication information indicates a first TAG of the serving cell, and
when being 0, the first indication information indicates a second TAG of the serving cell.

26. A communication apparatus, comprising:
a receiving unit, configured to receive a physical random access channel PRACH; and
a sending unit, configured to send random access response RAR information, wherein the RAR information comprises first indication information, the first indication information indicates timing advance group TAG information, and the RAR is a response to the PRACH, wherein
the receiving unit is configured to receive third information, wherein the third information is carried on a physical uplink shared channel PUSCH scheduled by an uplink grant of the RAR information, and a timing advance TA used for sending the third information is a TA corresponding to a TAG indicated by the first indication information.

27. The apparatus according to claim 26, wherein two TAGs are configured in a serving cell of a terminal device; and
that the first indication information indicates timing advance group TAG information comprises: the first indication information indicates one of the two TAGs of the serving cell.

28. The apparatus according to claim 27, wherein
when being 0, the first indication information indicates a first TAG of the serving cell, and
when being 1, the first indication information indicates a second TAG of the serving cell; or
when being 1, the first indication information indicates a first TAG of the serving cell, and
when being 0, the first indication information indicates a second TAG of the serving cell.

29. A communication apparatus, comprising:
a unit configured to implement the method according to any one of claims 1 to 3, or a unit configured to implement the method according to any one of claims 7 to 13, or a unit configured to implement the method according to any one of claims 14 to 17, or a unit configured to implement the method according to any one of claims 18 to 20.

30. A communication apparatus, comprising:
a unit configured to implement the method according to any one of claims 4 to 6, or a unit configured to implement the method according to claim 21 or 22.

31. A computer-readable storage medium, wherein the computer-readable storage medium stores a computer program; and when the computer program is run,
the method according to any one of claims 1 to 3 is performed, or
the method according to any one of claims 4 to 6 is performed, or
the method according to any one of claims 7 to 13 is performed, or
the method according to any one of claims 14 to 17 is performed, or
the method according to any one of claims 18 to 20 is performed, or
the method according to claim 21 or 22 is performed.

32. A chip system, comprising a processor, configured to invoke a computer program from a memory and run the computer program, to
perform the method according to any one of claims 1 to 3, or
perform the method according to any one of claims 4 to 6, or
perform the method according to any one of claims 7 to 13, or
perform the method according to any one of claims 14 to 17, or
perform the method according to any one of claims 18 to 20, or
perform the method according to claim 21 or 22.

33. A communication system, comprising a terminal device and a network device, wherein the terminal device is configured to perform the method according to any one of claims 14 to 17, and the network device is configured to perform the method according to claim 21 or 22.

34. A communication system, comprising a terminal device and a network device, wherein the terminal device is configured to perform the method according to any one of claims 1 to 3, and the network device is configured to perform the method according to any one of claims 4 to 6.
